Europäisches Patentamt

European Patent Office

Office européen des brevets

(11) Numéro de publication: **0 348 247**
A1

## (12) DEMANDE DE BREVET EUROPEEN

(21) Numéro de dépôt: 89400854.9

(22) Date de dépôt: 24.03.89

(51) Int. Cl.⁴: **G 01 B 11/00**
G 01 B 11/24, G 05 B 19/42,
G 05 B 19/403, B 23 Q 35/128

(30) Priorité: 25.03.88 FR 8803991

(43) Date de publication de la demande:
27.12.89 Bulletin 89/52

(84) Etats contractants désignés:
AT BE CH DE ES FR GB GR IT LI LU NL SE

(71) Demandeur: KREON INGENIERIE MARKETING
Route des Usines
F-65300 Lannemezan (FR)

(72) Inventeur: Everaere, Michel
Lotissement du Bois Pinas
F-65300 Lannemezan (FR)

(74) Mandataire: Rinuy, Santarelli
14, avenue de la Grande Armée
F-75017 Paris (FR)

Le titre de l'invention a été modifié (Directives relatives à l'examen pratiqué à l'OEB, A-III, 7.3)

(54) Procédé de détermination et de reconstitution des coordonnées spatiales de chacun des points d'un ensemble de points échantillonnant une surface tridimensionnelle et reconstruction de cette surface à partir desdites coordonnées.

(57) Le procédé est notamment applicable à la vidéo sculpture. On enregistre au moyen de caméras (13a, 13b) et de magnétoscopes (14a, 14b) une série d'images de la surface tridimensionnelle éclairée par un faisceau plan de lumière laser généré par un laser (12). Le procédé comporte une phase de passage des coordonnées des points images enregistrés par le système de vision aux coordonnées spatiales mise en oeuvre par le module (17), une phase de reconstitution des points éventuellement mal enregistrés par le système de vision, mise en oeuvre par le module (16) et une phase de détermination de l'axe d'un outil (18) sculptant l'image tridimensionnelle dans une matière telle que du bois ou de l'aluminium, cette dernière phase étant mise en oeuvre par le module (19).

FIG. 1

**Description**

**Procédé de détermination et de reconstitution des coordonnées spatiales de chacun des points d'un ensemble de points échantillonnant une surface tridimensionnelle, et procédé de réalisation d'une image tridimensionnelle de cette surface à partir desdites coordonnées.**

La présente invention concerne, d'une manière générale, le problème de la réalisation d'une image trimensionnelle d'une surface quelconque à partir d'images bi-dimensionnelles de ladite surface. Elle trouve une application importante, mais non exclusive, dans le domaine de la "vidéo sculpture".

L'invention vise notamment un procédé de détermination des coordonnées spatiales de chacun d'un ensemble de points appartenant à ladite surface trimensionnelle et échantillonnant cette dernière, à partir desdites images préenregistrées. Grâce aux données procurées ainsi, l'invention permet une commande optimale d'une machine-outil à commande numérique pour usiner ladite image tridimensionnelle dans un matériau, dans le cadre de son application à la "vidéo sculpture".

On connaît un tel procédé permettant, dans l'art antérieur, de réaliser l'image tridimensionnelle d'un buste à partir d'une série d'images vidéo. Le sujet est assis sur un fauteuil tournant et son buste est éclairé au moyen d'un laser fournissant un faisceau plat lamellaire. L'intersection du faisceau plat avec le buste du sujet donne une courbe (ou profil) que l'on échantillonne, les coordonnées spatiales des points source des échantillons étant déterminées au moyen d'un procédé de type connu, tel que celui enseigné dans le brevet français 81.24418. Le fauteuil sur lequel est assis le sujet effectue une rotation pas à pas et à chaque fois une courbe est ainsi numérisée. En une rotation complète, on obtient ainsi un nombre prédéterminé de courbes (par exemple 512) échantillonnées chacune en un nombre prédéterminé de points (par exemple 512). Le buste est ainsi numérisé sous la forme des coordonnées X-Y-Z de chacun des points mémorisées (au nombre de 262.144 dans l'exemple ci-dessus).

L'étape suivante consiste à traiter les points numérisés ainsi obtenus de façon à générer des ordres permettant de commander la machine-outil, de telle sorte que cette dernière sculpte dans une matière solide telle que de l'aluminium ou du bois l'image tridimensionnelle du buste.

La présente invention apporte notamment un perfectionnement au procédé décrit ci-dessus.

Le procédé connu jusqu'à présent présente, en effet, un certain nombre d'inconvénients, notamment dans la phase de traitement des informations et de génération des signaux électriques susceptibles de commander la machine-outil, cette phase étant communément appelée dans les milieux spécialisés, phase de CFAO (conception et fabrication assistées par ordinateur).

Ainsi, le procédé d'éclairement du buste n'est pas parfait en ce sens que la peau ou les cheveux du sujet réfléchissent la lumière émise par le laser de façon variable, ce qui peut se traduire par des points suréclairés ou des points sous-éclairés. Dans certaines circonstances, la peau ou les cheveux du sujet peuvent présenter une faible albébo, ce qui signifie que le point éclairé ne réfléchit pas de lumière. Dans un tel cas, la trace enregistrée par la caméra vidéo comporte des absences de points créant des ruptures de continuité de la trace. On considère alors qu'il existe des points "manquants" qui auraient dû combler les vides ou les ruptures de con tinuité. Ces points "manquants" correspondent aux points de buste présentant un faible albédo.

A l'inverse, des points de fort albédo peuvent réfléchir la lumière de façon très forte et diffractent la lumière sur d'autres parties du buste, la trace enregistrée n'étant pas continue et comportant en fait divers points extérieurs à la trace normale. Il s'agit dans un tel cas de points que l'on qualifie "d'aberrants".

Dans l'un et l'autre cas, l'usinage, sous le contrôle de la CFAO, manque de précision, ce qui génère des erreurs préjudiciables pour la qualité du produit fini.

Une autre série d'inconvénients est également due au fait que le procédé utilisé pour déterminer les coordonnées spatiales à partir des coordonnées des points image enregistrés par la vidéo, fait appel à des formules trigonométriques telles que celles décrites dans le brevet 81.24418 mentionné plus haut. Il s'ensuit un manque de précision. Il est donc souhaitable de disposer d'un procédé de détermination des coordonnées spatiales des points considérés, plus précis et plus fiable.

Par ailleurs, la Demanderesse a constaté qu'il était souhaitable d'orienter l'outil de telle sorte qu'il attaque la matière sous un angle correspondant à la normale à la surface devant être réalisée, ce qui permet d'obtenir un meilleur fini et un meilleur rendu de la pièce. L'art antérieur ne prévoit pas une telle hypothèse puisque la machine qui est utilisée n'est commandée que selon trois degrés de liberté, ce qui ne permet que de positionner de façon correcte la fraise attaquant la matière, mais ne permet pas de positionner l'angle d'attaque de cette fraise par rapport à la matière. Il est donc souhaitable de disposer d'un procédé permettant de commander et de contrôler autant que possible l'angle d'attaque de l'outil par rapport à la matière.

Enfin, la Demanderesse a constaté que dans certaines zones telles que les yeux ou la bouche, si l'angle d'attaque de la fraise est normal à la surface à usiner, il risque de se produire une collision entre l'arbre porte-outil et la matière usinée. Par conséquent, dans ces hypothèses, il faut pouvoir rectifier, de façon automatique dans toute la mesure du possible, la position de l'arbre porte-outil de telle sorte que l'outil attaque la matière sous un angle favorable mais que l'on évite, autant que possible, les collisions entre l'arbre porte-outil et la matière. A cet égard, il est donc souhaitable de disposer dans la CFAO d'une phase permettant de déterminer la direction optimale de l'arbre porte-outil.

La présente invention résout l'ensemble de ces problèmes.

Elle vise notamment en effect un procédé de détermination de coordonnées spatiales de chacun des points

EP 0 348 247 A1

d'un ensemble de points source appartenant à une surface comportant une étape d'acquisition de données dans laquelle on éclaire avec un faisceau plan de lumière la surface, on enregistre avec au moins une caméra au moins une image de la trace laissée par le faisceau plan sur la surface, la trace laissée par le faisceau plan de lumière sur la surface étant dite "profil source", l'image de cette trace dans un plan image de la caméra étant dite "profil image", on déplace relativement le faisceau plan et la surface et on enregistre avec ladite caméra à nouveau au moins une image de la trace laissée par le faisceau plan sur la surface, on recommence les opérations de déplacement relatif, d'éclairage et d'enregistrement de sorte que l'on enregistre ainsi une pluralité de profils image constituant un échantillonnage de l'image de l'ensemble de la surface, le procédé comportant une étape de traitement au cours de laquelle, notamment, on considère les coordonnées lignes-colonne (Col,Lig) d'un ensemble de points image échantillonnant chaque image profil dans le plan image de ladite caméra, procédé caractérisé en ce que, mettant en oeuvre les considérations suivant lesquelles :
- dans le plan du faisceau lumineux, on choisit un axe directeur et on affecte des coordonnées dites "spatiales" (R,H), à chaque point dudit plan, R étant la distance entre le point considéré et l'axe directeur, H étant l'ordonnée de ce point sur cet axe ;
- on prend en compte les formules suivantes de transformation des coordonnées (Col,Lig) de chacun des points du plan image de la caméra en coordonnées spatiales (R, H) du point source correspondant :

$$(1) \qquad R = \frac{\alpha_1 Lig + \alpha_2 Col + \alpha_3}{\alpha_7 Lig + \alpha_8 Col + 1} \qquad H = \frac{\alpha_4 Lig + \alpha_5 Col + \alpha_6}{\alpha_7 Lig + \alpha_8 Col + 1}$$

les coefficients $\alpha_i$ étant dits "coefficients de transformation" et étant déterminés pour l'ensemble des points du plan image de ladite caméra, à partir de coefficients dits "d'interpolation" ($\beta_{ij}$) eux-mêmes calculés lors d'une phase préalable de calibration du plan image de la caméra au cours de laquelle :
. on enregistre l'image de séries juxtaposées de quatre points source de référence situés dans le plan de la lumière et dont les coordonnées spatiales (R, H) dans ce plan sont connues ; on relève les coordonnées images (Col,Lig) de l'image de chacun de ces points pour chaque série de quatre points source de référence et on résout la formule de transformation (1), ce qui donne huit valeurs de coefficients de transformation $\alpha_i$ par série de quatre points de référence ; on considère le barycentre de chacune des séries de quatre points de référence et on affecte à ce dernier les coefficients de transformation $\alpha_i$ ainsi déterminés ; on considère des zones d'interpolation $T_k$ de forme triangulaire délimitées par des segments de droite joignant lesdits barycentres de séries voisines, ces barycentres constituant les sommets desdites zones triangulaires $T_k$ ; on utilise la formule d'interpolation suivante pour chaque coefficient de transformation $\alpha_i$:
(2) $\qquad \alpha_i = \beta_{i1} Col + \beta_{i2} Lig + \beta_{i3}$
. on détermine vingt-quatre coefficients d'interpolation ($\beta_{ij}$) par zone triangulaire d'interpolation ($T_k$) en résolvant la formule d'interpolation (2) pour chacun des coefficients de transformation ($\alpha_i$) affecté à un sommet de zone triangulaire d'interpolation $T_k$ ;
ce procédé consiste en outre, dans ladite phase de traitement, pour déterminer les coordonnées spatiales (R,H) d'un point source dont on connaît les coordonnées images (Col,Lig) de son image, à effectuer les opérations suivantes :
- rechercher, dans une opération de recherche, la zone d'interpolation ($T_k$) à laquelle le point appartient, ainsi que les coefficients d'interpolation ($\beta_{ij}$) associés à cette zone.
- calculer, dans une opération de calcul, les coordonnées spatiales (R, H) par application concomitante desdites formules de transformation (1) et d'interpolation (2).

Selon un autre aspect de l'invention, il est mis en oeuvre une phase d'homogénéisation au cours de laquelle, pour chacun des points traités ($P_{i,n}$), on considère un nombre prédéterminé de points voisins, on calcule les coordonnées moyennes de ces points, si le point traité est absent, ou si l'une au moins de ses coordonnées diffère de la coordonnée moyenne correspondante d'un écart supérieur à une valeur prédéterminée (E), on affecte au point traité lesdites coordonnées moyennes.

Ainsi, grâce à ces dispositions, on dispose d'une méthode fiable et précise pour déterminer et/ou reconstituer les coordonnées spatiales d'un ensemble de points à partir de leurs coordonnées dans le plan image de la caméra.

De plus, grâce à la phase d'homogénéisation, on pallie les inconvénients liés aux points de faible ou de trop forte albédo sur la surface à reproduire.

La présente invention vise également un procédé de vidéo sculpture, notamment du type tel que succinctement rappelé ci-dessus, pouvant, avantageusement, mettre en oeuvre le procédé de détermination et/ou de reconstitution des coordonnées spatiales énoncé ci-dessus, notamment caractérisé en ce qu'il met en oeuvre une machine-outil adaptée à commander un outil selon cinq degrés de liberté, à savoir trois degrés de liberté permettant le positionnement de cet outil dans l'espace, compte tenu desdites coordonnées spatiales et deux degrés de liberté déterminant un angle d'attaque de l'outil de telle sorte que l'outil soit généralement dirigé selon la normale à la surface devant être réalisée et en ce que l'on procède à une détection des parties concaves de la surface, pour corriger l'angle d'attaque de l'outil pour éviter autant que possible une interaction entre l'outil et la matière usinée, au cours de laquelle :

3

- on considère la trace laissée par ladite surface dans un plan perpendiculaire à un axe directeur et passant par le point en cours de traitement ($P_{i,n}$), cette trace étant dite sécante ($S_i$),

- on considère également un profil source $\theta_n$ auquel appartient le point traité ($R_i$, $H_i$, $\theta_n$),

- on détecte les parties concaves du profil en effectuant les opérations suivantes :

. on considère un vecteur normal ($\overrightarrow{DN}_{\theta_n,\,i-1}$, $\overrightarrow{DN}_{\theta_n,i+1}$) à chacun des deux points voisins ($R_{i-1}$,$H_{i-1}$,$\theta_n$) et ($R_{i+1}$,$H_{i+1}$,$\theta_n$), du point traité ($R_i$,$H_i$,$\theta_n$)

. on calcule le produit vectoriel desdits vecteurs normaux ($\overrightarrow{DN}_{\theta_n,i-1}$, $\overrightarrow{DN}_{\theta_n,i+1}$) au profil aux points voisins du point traité ; on détermine ainsi un coefficient de convexité $QD_i$ associé au point en traitement ($R_i$, $H_i$, $\theta_n$),

. si le coefficient de convexité est négatif, le profil source est concave au point traité, et on calcule la somme ($\overrightarrow{ED}_{\theta_n,\,i}$) desdits vecteurs normaux au profil, aux deux points voisins du point traité, ($\overrightarrow{DN}_{\theta_n,i-1}$, $\overrightarrow{DN}_{\theta_n,i+1}$),

. on mémorise ce vecteur somme ($\overrightarrow{ED}_{\theta_n,i}$),

. on considère alors l'ensemble des points traités appartenant à un même profil ($\theta_n$) ; on associe à chacun de ces points soit le vecteur normal au profil au point considéré, lorsque le coefficient de convexité QD considéré est positif, soit le vecteur somme, lorsque le coefficient de convexité (QD) est négatif,

. lorsque l'ensemble des points appartenant à un même profil est traité, on recommence un nombre prédéterminé de fois le traitement du profil en utilisant les vecteurs effectivement associés ($\overrightarrow{DN}_{\theta_n,\,i}$, $\overrightarrow{ED}_{\theta_n,i}$) au point traité ($R_i$, $H_i$, $\theta_n$).

- on procède à un traitement analogue pour chacune des traces sécantes ($S_i$) et on associe à chacun des points traités ($R_i$, $H_i$, $\theta_n$) un vecteur correspondant soit à la normale à ladite trace sécante $S_i$ au point traité $\overrightarrow{SN}_{\theta_n,i}$, soit à un vecteur somme, $\overrightarrow{ES}_{\theta_n,i}$) des vecteurs effectivement associés aux points voisins ($R_i$, $H_i$, $\theta_{n-1}$) ($R_i$, $H_i$, $\theta_{n+1}$) au point traité ($R_i$, $H_i$, $\theta_n$).

et, pour chaque point, on dirige l'outil selon la direction des vecteurs effectivement associés audit point, dans la place de son profil ($\theta_n$) et dans celui de la trace sécante ($S_i$) à laquelle il appartient.

Grâce à ces dispositions, on contrôle de façon optimale l'outil, tout en évitant, de façon automatique le plus souvent, toute interférence entre l'outil et la matière.

Les caractéristiques et avantages ressortiront d'ailleurs de la description qui va suivre en référence aux dessins annexés sur lesquels :

- la figure 1 est une vue schématique des moyens mettant en oeuvre un procédé de vidéo sculpture conforme à l'invention,

- la figure 2 est une vue schématique illustrant la position relative du laser et des caméras illustrés en figure 1,

- les figures 2a et 2b illustrent une variante de réalisation,

- la figure 3 est une vue schématique d'une surface tridimensionnelle à reproduire,

- la figure 4 illustre, de façon schématique, un profil image tel qu'enregistré par chacune des caméras de la figure 1,

- la figure 5 illustre le profil source correspondant au profil image de la figure 4,

- la figure 6 est une vue schématique d'une mire de calibration du système de vision,

- la figure 7 est une vue schématique d'une autre mire de calibration permettant une calibration plus précise de chacune des caméras,

- la figure 8 est un schéma fonctionnel des principaux moyens mis en oeuvre dans le mode de réalisation décrit et représenté,

- la figure 9 est un organigramme simplifié de transformation réalisant l'une des étapes illustrées en figure 8,

- La figure 10 est une illustration de cinq profils source du sujet illustré en figure 3,

- les figures 11 à 13 illustrent un profil source présentant une partie concave et les étapes permettant de corriger la direction de l'outil pour éviter une interaction outil-matière et,

- les figures 14 et 15 illustrent une trace "sécante" présentant une partie concave.

On va tout d'abord brièvement décrire un mode de réalisation du procédé selon l'invention et les moyens le mettant en oeuvre pour avoir une vue générale. On décrira ensuite plus en détail certaines phases du procédé.

## 1. Généralités

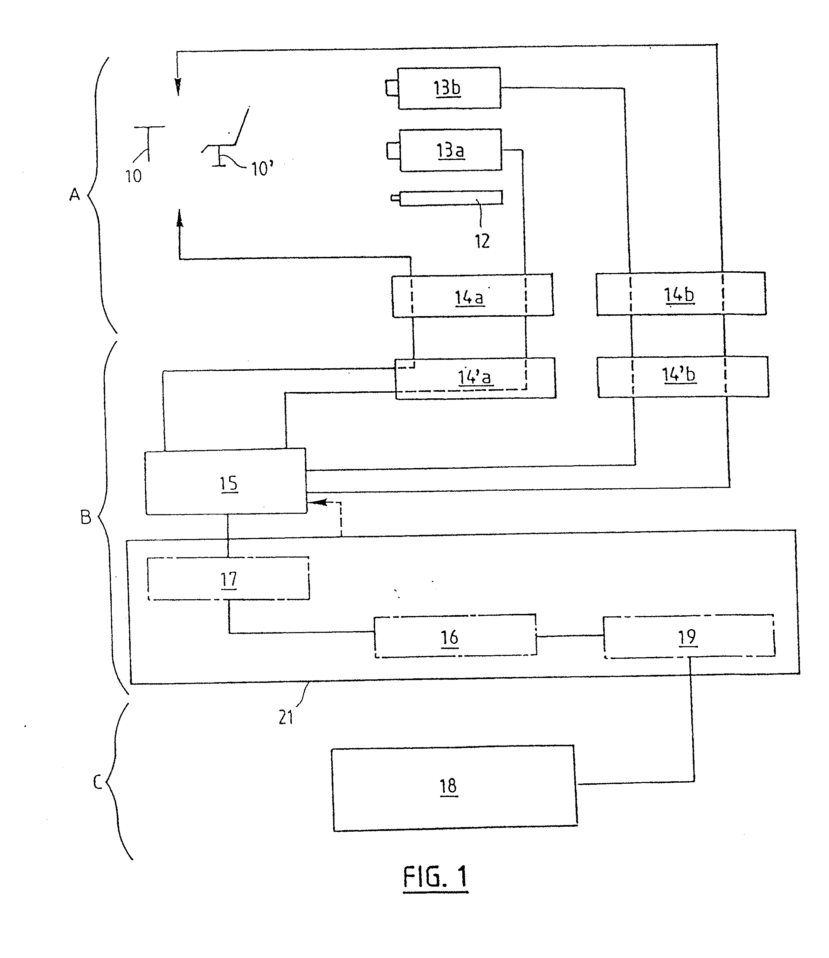

La figure 1 illustre de façon générale des moyens mettant en oeuvre un procédé de vidéo sculpture comportant le procédé de réalisation d'une image tridimensionnelle selon la présente invention.

Le procédé de vidéo sculpture illustré comporte, de façon classique, trois étapes principales mises en oeuvre par des ensembles de moyens :

- l'ensemble A permet l'acquisition de l'information,

- l'ensemble B permet le traitement de l'information,

- l'ensemble C est une utilisation de l'information, en l'espèce usinage de l'objet copié au moyen d'une machine-outil 18.

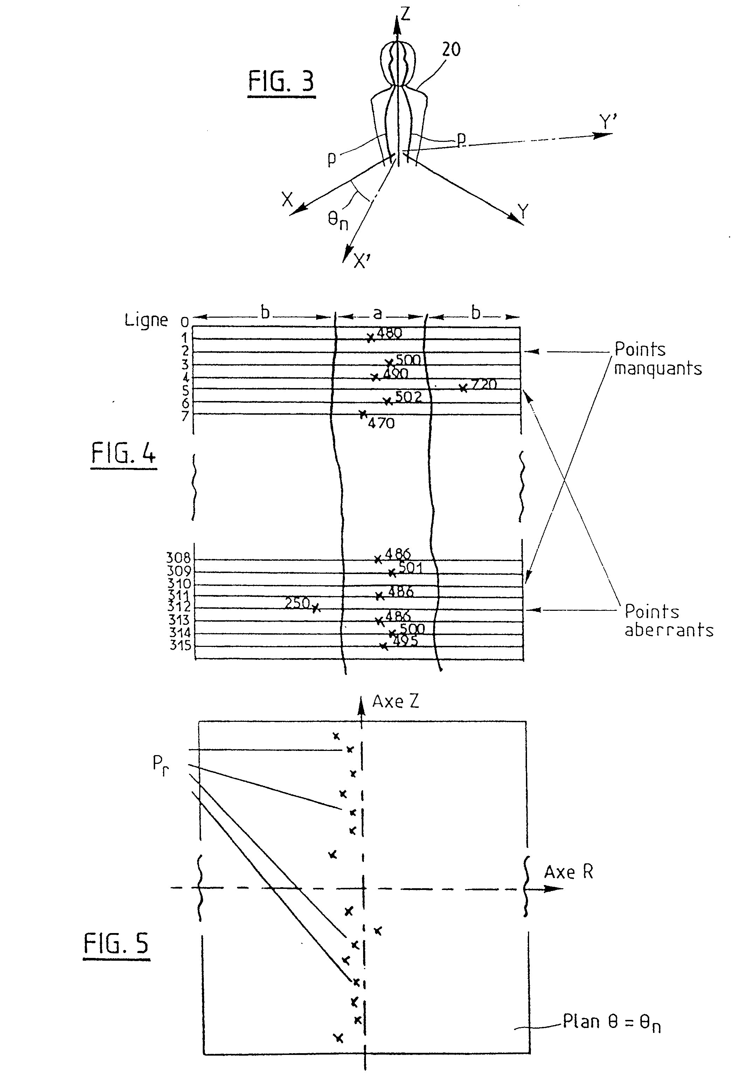

L'acquisition de l'information se fait en plaçant l'objet à copier sur une table 10 ou le sujet dont on désire modeler le buste sur un siège 10'. La table 10 et le siège 10' sont rotatifs et entraînés à cet effet par un moteur pas à pas non représenté. Le sujet ou l'objet sont éclairés au moyen d'un laser 12. Dans le mode de réalisation choisi et représenté, un seul laser éclaire le sujet ou l'objet. Deux caméras 13a, 13b filment l'objet ou le sujet alors que la table 10 ou le siège 10′ effectue un tour complet. Les pas angulaires de la table ou du siège sont ici de 1° en sorte que deux magnétoscopes 14a, 14b respectivement raccordés aux caméras 13a, 13b enregistrent ainsi chacun 360 images p de l'objet ou du sujet éclairé par le laser 12 (voir figure 3).

Sur la figure 3, on a illustré un sujet 20 et deux traces p laissées par le laser 12. Le double système d'acquisition des données 13a, 14a et 13b, 14b enregistre ainsi une pluralité de traces ou "profils" p réalisant, de ce fait, un échantillonnage de l'image de l'ensemble de la surface du buste 20 du sujet.

Avant de poursuivre la présente description, il est donné les définitions suivantes :
- "point source" : point appartenant à la surface extérieure de l'objet ou du sujet que l'on veut reproduire,
- "profil source" : trace p laissée par le laser sur le buste 20 ou l'objet à reproduire,
- "point image" : image d'un point source enregistré par la caméra 13a et/ou la caméra 13b, dans un "plan image" appartenant à la caméra considérée. Le point image est caractérisé par ses coordonnées (Col,Lig) dans le plan image ainsi qu'il ressortira du reste de la description,
- "profil image" : image du profil source dans le plan image de la caméra considérée.

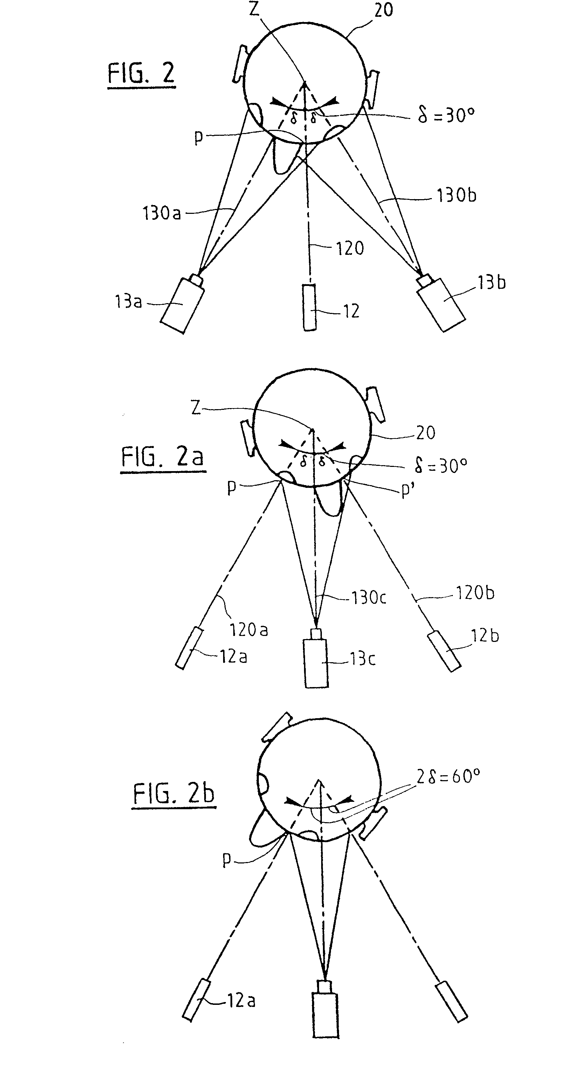

La figure 2 illustre schématiquement la disposition relative des deux caméras 13a, 13b et du laser 12. L'ensemble est vu du dessus, la tête du sujet portant la référence 20, l'axe 120 du laser 12 et celui (130a, 130b) de chacune des caméras 13a, 13b se coupe sur un axe vertical Z correspondant à l'axe de rotation du siège 10′ sur lequel est assis le sujet. L'axe Z est dit, dans la suite de la description, "axe directeur". On observe que l'axe Z débouche de la tête 20 sensiblement au milieu de cette dernière. Les axes 130a, 130b, sont inclinés d'un angle δ de 30° par rapport à l'axe 120 du laser 12. Ce dernier émet un faisceau de lumière plan qui laisse une trace, également appelée profil et référencée sur la figure 2 en p, sur la tête et sur le buste du sujet.

On choisit l'une des deux caméras, la caméra 13a en l'espèce, comme caméra directrice. En règle générale, cette dernière voit en permanence et dans sa totalité la trace du faisceau laser sur la tête et le buste du sujet. Cependant, dans certaines zones, la trace p est partiellement cachée, et ne peut être vue de la caméra directrice 13a (voir par exemple la figure 2 : au niveau du nez, la trace p est, pour une portion de son étendue tout au moins, masquée). Aussi, dans un tel cas, on utilisera les données issues de la caméra secondaire 13b, qui, s'agissant de l'exemple illustré en figure 2 tout au moins, voit la portion masquée de la trace p. Plus loin, dans la description, il sera expliqué comment un fichier directeur Fla, associé à la caméra directrice 13a, est complété par les données issues de la caméra secondaire 13b.

Il convient ici d'observer que le mode d'acquisition des données est particulièrement bien adapté à une surface présentant une forme variable sur les 360° de sa périphérie.

Cependant, une telle disposition n'est pas impérative. En effet, au lieu de placer l'objet à reproduire sur un plateau tournant, on pourra, par exemple, le disposer sur un plateau animé d'un mouvement de translation de telle sorte que les traces seront alors parallèles entre elles et parallèles à un axe directeur solidaire de l'objet, cet axe se déplaçant parallèlement à lui-même. Ce pourra être le cas lorsque l'objet à reproduire est par exemple une carte en relief dont la représentation mathématique est de la forme : $z = f(x, y)$ et dont seule une face est à reproduire. En revanche, lorsque l'objet doit être reproduit dans son ensemble, on utilisera le procédé du plateau tournant décrit plus haut.

A propos du mode de réalisation illustré, on notera par ailleurs que, avantageusement, compte tenu de la forme de l'objet, ou de la morphologie du sujet, il est possible de paramétrer les déplacements angulaires pour obtenir plus d'images sur les zones de l'objet du sujet dont la surface est sujette à de brusques variations (par exemple le nez du sujet) et moins d'images dans les zones où la surface est plus régulière (par exemple, la nuque du sujet).

Dans l'exemple illustré, les données sont enregistrées sur un premier ensemble de magnétoscopes 14a, 14b, un autre ensemble de magnétoscopes 14′a, 14′b étant utilisé pour le traitement de l'information. Ceci permet de décentraliser la phase de traitement par rapport à celle d'acquisition.

En figure 2a, il est illustré une variante de réalisation de l'ensemble d'acquisition de données mettant en oeuvre une seule caméra 13c et deux lasers 12a, 12b. Cette figure illustre schématiquement la disposition relative des deux lasers et de la caméra. L'ensemble est vu du dessus, la tête du sujet portant aussi la référence 20. L'axe 130c de la caméra et celui (120a, 120b) de chacun des lasers 12a, 12b se coupent sur un axe vertical Z correspondant à l'axe de rotation du siège 10′ sur lequel est assis le sujet. Les axes 120a, 120b sont inclinés de 30° par rapport à l'axe 130c de la caméra. Les lasers 12a, 12b émettent chacun un faisceau de lumière. Ce faisceau laisse sur la tête du sujet et son buste une trace, référencée sur la figure 2a en p (trace laissée par le laser de gauche 12a) et en p′ (trace laissée par le laser de droite 12b).

En règle générale, la caméra voit en permanence les deux traces des lasers sur la tête de la personne. Ces deux traces sont complètement séparées car elles ne peuvent avoir de point commun que sur l'axe de rotation Z. Les moyens électroniques ne prennent en considération que l'une des traces, en l'espèce la trace p′, laissée par le laser de droite 12b. Cependant, comme précédemment, dans certaines zones, la trace de droite sera cachée (zone masquée par le nez du sujet, par exemple). Aussi, dans un tel cas, la caméra 13c ne peut voir cette trace ou tout du moins la portion de celle-ci qui est masquée par le nez. Dans ce cas, les moyens électroniques prennent en compte la trace de gauche vue par la caméra lorsque la tête a pivoté de 60° comme illustré en figure 2b. En effet, la trace p laissée par le laser de gauche 12a (de la figure 2b) est identique à celle (p′) laissée par le laser de droite 12b de la figure 2a. Grâce à cette disposition, on peut ainsi compenser et retrouver les zones masquées par le nez ou les oreilles par exemple.

Cette variante de réalisation présente pour avantages d'alléger sensiblement le dispositif d'acquisition des données puisque l'on fait l'économie d'une deuxième caméra et de deux magnétoscopes. Cependant, cette variante de réalisation présente, par rapport au mode préféré de réalisation choisi, deux inconvénients : d'une part, la mise en oeuvre de la prise en compte des 60° de décalage complique sensiblement le traitement et, d'autre part, les contraintes mécaniques sont telles que le profil p' (figure 2a) ne coïncide pas parfaitement avec le profil p (figure 2b) une fois que la tête a pivoté de 60° : en effet, le sujet est incapable de rester parfaitement immobile pendant ce temps. C'est pourquoi, en définitive, le Demanderesse a préféré mettre en oeuvre le mode de réalisation décrit à l'appui des figures 1 et 2. Cependant, la variante illustrée à l'appui des figures 2a et 2b démontre qu'il existe divers procédés permettant d'enregistrer l'ensemble de la surface à reproduire, y compris les parties cachées. Aussi, la présente invention englobe-t-elle à cet égard toutes variantes susceptibles d'arriver à ce résultat.

Le signal analogique issu des caméras 13a, 13b enregistré dans les magnétoscopes 14a, 14b et délivré par les magnétoscopes 14'a, 14'b se présente sous la forme d'une série de courbes (les profils p). Les courbes sont sensiblement continues et présentent des points très éclairés et des points faiblement éclairés.

Chacune de ces courbes est numérisée dans les moyens électroniques 15, de façon connue en soi, au moyen d'un convertisseur analogique-numérique qui délivre les coordonnées image (ligne, colonne), d'une suite d'échantillons représentatifs de chacune des courbes. Le brevet français 81.24418 décrit un mode préféré de réalisation permettant de réaliser cette numérisation, et par conséquent le convertisseur 15 ne sera pas décrit plus en détail ici.

Cependant, la Demanderesse a constaté que pour des raisons d'ordre technique et économique, l'objet ou le sujet à reproduire étant disposé sur un support rotatif, les coordonnées les plus facilement exploitables et les plus économiques du point de vue taille mémoire à utiliser sont les coordonnées dites "cylindriques" (R ,H, $\theta$), R correspondant à la distance entre un point de la surface et l'axe de Z tandis que H correspond à l'ordonnée le long de l'axe des Z et $\theta$ correspond à la coordonnée angulaire du profil source (intersection d'un axe X' appartenant à un référentiel solidaire du buste 20, figure 3, avec l'axe X dans le plan XY fixe).

La coordonnée $\theta$ correspond en fait au pas (ou à un nombre de pas prédéterminé et paramétrable) du moteur commandant la rotation du siège 10'. Une impulsion est enregistrée dans la bande son des magnétoscopes 14a, 14b à chaque pas du moteur ; comme par ailleurs, la bande son est synchronisée avec la prise d'image, on connaît la position du moteur (et par conséquent l'angle $\theta$) à chaque prise d'image.

Les moyens de traitement B de l'invention comportent, outre les magnétoscopes 14'a, 14'b et le convertisseur 15 des moyens 17 procédant à une reconstitution des coordonnées cylindriques des points source à partir des coordonnées image de chacun des échantillons composant les profils. Le procédé de reconstitution mis en oeuvre par les moyens de transformation 17 est décrit plus loin.

En sortie des moyens de transformation 17, on dispose d'informations portant sur les coordonnées cylindriques d'un nombre prédéterminé de points représentatifs de la surface tridimensionnelle, ici celle du buste 20 à reproduire.

Les moyens de traitement de l'information B comportent un ensemble de CFAO composé de deux modules 16 et 19 raccordé aux moyens de transformation 17. Cet ensemble traite les coordonnées issues des moyens 17 et permet la commande d'une machine-outil 18. Cet ensemble met en oeuvre, notamment par des moyens informatiques, un procédé décrit en détail plus loin.

Les moyens de transformation 17, et l'ensemble CFAO 16, 19 sont, dans le mode de réalisation préféré présentement décrit, constitués par un micro-ordinateur 21 réalisant les fonctions des moyens 17, 16 et 19 décrites plus loin et contrôlant, de surcroît, le convertisseur 15. Le micro-ordinateur 21 est ici un ordinateur IBM, modèle commercialisé sous la référence AT3.

Enfin, la machine-outil 18 qui, ici, est du type NC-TRIAX-R6-2-TWIST, fabriquée par la Société italienne CMS, permet de sculpter dans un matériau tel que du bois, de la résine ou de l'aluminium, une forme reproduisant sensiblement celle du buste du sujet assis dans le siège 10' ou celle de l'objet à reproduire disposé sur la table 10.

En résumé, dans le mode de réalisation présentement décrit, le procédé traitant des données issues du convertisseur 15 comporte trois phases :
- une phase de passage des coordonnées image des points image enregistrés aux coordonnées cylindriques de leurs points source. C'est la fonction des moyens de transformation 17,
- une phase d'homogénéisation des points, (fonction du module 16),
- une phase de détermination de la normale à la surface et de correction de cette normale, pour déterminer la direction de l'outil (fonction du module 19).

Dans la description qui va suivre, on va décrire en détail chacune de ces trois phases. On commencera par expliquer tout d'abord la structure des données fournies par le système de vision constitué ici par les caméras, les faisceaux laser, les magnétoscopes et le convertisseur.

## 2. Structure des données en sortie du convertisseur 15

Chacune des 360 images enregistrées correspond à un profil source, caractérisé par l'angle $\theta_n$ formé entre l'axe X' et l'axe des X dans le plan X-Y.

On notera dans la suite de la description que $\theta$ désigne tout à la fois la coordonnée angulaire d'un profil source, le plan contenant ce profil source caractérisé par sa coordonnée angulaire $\theta$, et le profil image correspondant au profil source $\theta$. La variable $\theta$ est indicée notamment selon n, n correspondant au numéro d'ordre du profil source ou image considéré.

Chaque caméra vidéo 13a, 13b est une caméra par exemple de type THOMSON TAV-1033-NEWICON délivrant 316 lignes par image et 1024 pixels par ligne. Aussi, les profils image $\theta_n$ sont-ils en fait constitués par une succession de points caractérisés par leur coordonnée dans l'image vidéo enregistrée, ces dernières correspondant en fait à celles du pixel. En effet, pour un pixel donné, on connaît la ligne sur laquelle il est disposé (coordonnée Lig variant de 0 à 315) et la position du pixel dans cette ligne (coordonnée Col variant de 0 à 1023).

Un point quelconque du profil image $\theta_n$ est donc défini par ses coordonnées : (Col, Lig, $\theta_n$).

En figure 4, on a illustré de façon schématique, un profil image $\theta_n$ tel qu'enregistré par la caméra vidéo. On a schématisé par une croix le pixel éclairé à l'occasion de la prise d'images. Chaque image est constituée par 316 lignes ordonnées de 0 à 315, 1024 pixels étant susceptibles d'être éclairés sur une ligne. On a indiqué, à titre indicatif, pour le profil $\theta_n$ illustré, le numéro du pixel éclairé au-dessus de la croix schématisant ce pixel. Ainsi, dans l'exemple illustré en ligne 1, le pixel n° 480 est éclairé, en ligne 3, le pixel n° 500 est éclairé, etc.

Pour chaque point du profil $\theta_n$, on dispose donc de ses coordonnées image (Col, Lig, $\theta_n$). A titre d'exemple, celles du point situé sur la sixième ligne de la figure 4 sont : (502,6, $\theta_n$).

Les moyens de transformation 15 mettent en oeuvre un fichier image FI dans lequel les coordonnées image des points constituants les divers profils sont stockées de la manière suivante :
- le fichier image contient séquentiellement les ordonnées des pixels du profil, sur une ligne considérée,
- chaque coordonnée est codée sur un mot de 16 bits.

Le code d'un point image se fait de la façon suivante :

### TABLEAU I

| N° du bit | Commentaire |
|---|---|
| Bit 15 | 0 séparateur de profil |
| | 1 point du profil en cours |
| Bit 14 | 0 pas de point dans la ligne en cours |
| | 1 présence d'un point dans la ligne en cours |
| Bit 13-Bit 10 | 0 ces bits ne servent pas |
| Bits 9 - 0 | Position du pixel éclairé dans la ligne codée sur 10 bits |

A chaque profil image correspond un ensemble séquentiel de 316 mots. Les profils sont séparés par le mot: 0 0 0000 0000000000. Le numéro du profil en cours de lecture est inscrit dans un compteur.

Le tableau II ci-dessous illustre à propos du profil $\theta_n$ la structure du fichier FI de la figure 4.

### TABLEAU II

| | | |
|---|---|---|
| | 0 0 0000 0000000000 | Séparateur de profil |
| Profil $\theta_n$ | 1 0 0000 0000000000 | Lig 0, pas de point |
| | 1 1 0000 0111000000 | Lig 1, col 480 |
| | 1 0 0000 0000000000 | Lig 2, pas de point |
| | 1 1 0000 0111110100 | Lig 3, col 500 |
| | 1 1 0000 0111101010 | Lig 4, col 490 |
| | 1 1 0000 1011010000 | Lig 5, col 720 |
| | 1 1 0000 0111110110 | Lig 6, col 502 |
| | 1 1 0000 0111010110 | Lig 7, col 470 |
| | 1 1 0000 0111100110 | Lig 308, col 486 |
| | 1 1 0000 0111110101 | Lig 309, col 501 |
| | 1 0 0000 0000000000 | Lig 310, pas de point |
| | 1 1 0000 0111100101 | Lig 311, col 485 |
| | 1 1 0000 0011111010 | Lig 312, col 250 |
| | 1 1 0000 0111100110 | Lig 313, col 486 |
| | 1 1 0000 0111110100 | Lig 314, col 500 |
| | 1 1 0000 0111101111 | Lig 315, col 495 |
| | 0 0 0000 0000000000 | Séparateur de profil |
| Profil $\theta_{n+1}$ | 1 1 0000 0111100011 | Lig 0, col 493 |

En se référant à la figure 4 et au tableau II, on observe que chaque ligne peut comporter soit :
- 1 point dans une zone médiane a,
- 1 point dans des zones latérales b,
- aucun point dans ces zones. Il s'agit en fait de points insuffisamment éclairés pour les raisons expliquées ci-après.

Ainsi, en lignes 2 et 310, aucun pixel n'est éclairé. En revanche, en lignes 5 et 312, des pixels respectivement 720 et 250 se trouvent situés dans les zones latérales b. Ces points sont dits "aberrants".

En effet, le système de vision utilisé est tel qu'il est possible que certains points de l'objet ou du sujet ne réfléchissent pas suffisamment la lumière laser et, même, au contraire l'absorbent. Ces points sont des points dits "de faible albédo". Dans un tel cas, la lumière réfléchie étant insuffisante, le pixel concerné ne se trouve pas éclairé. C'est pourquoi en lignes 2 et 310, dans l'exemple illustré en figure 4, aucun pixel ne se trouve éclairé.

En revanche, il est possible que certains pixels se trouvent éclairés, ces pixels ne correspondant pas à des points du sujet appartenant au profil éclairé : ce sont ici les points "aberrants" des lignes 5 et 312 (par exemple pour cause de reflet de la lumière laser dans les cheveux du sujet).

On décrit plus loin une caractéristique de l'invention permettant de reconstituer les points manquants et de détecter les points aberrants.

En définitive, on observera qu'en sortie du convertisseur 15 et en entrée des moyens de transformation 17, on dispose d'un fichier récapitulant de façon séquentielle les coordonnées (Col, Lig, $\theta$) d'ensembles de 316 points appartenant à 360 profils.

### 3. Reconstitution des coordonnées spatiales du point source de chacun des points image enregistrés

Le problème posé est celui de permettre le passage des coordonnées image d'un point (Col, Lig, $\theta$) aux coordonnées spatiales de son point source, ces coordonnées spatiales étant en l'espèce choisies de type cylindrique (R, H, $\theta$).

Ce problème n'est pas simple car il s'agit de passer d'un système de coordonnées dans un plan particulièrement réduit, celui de la cellule de la caméra, à des coordonnées spatiales, en trois dimensions.

Une première méthode consiste à déterminer, de façon mathématique, pour chaque point du plan image les coordonnées cylindriques (R, H, $\theta$) du point source correspondant, étant entendu que l'angle $\theta$ est celui défini plus haut, ces coordonnées étant mémorisées dans un fichier et la transformation coordonnées image (Col, Lig, $\theta$) en coordonnées cylindriques (R, H et $\theta$) se faisant par simple lecture du fichier.

Cette méthode, bien qu'elle entre dans le cadre général de la présente invention, n'est pas satisfaisante techniquement et économiquement au moment du dépôt de la présente demande, car elle exige une taille mémoire particulièrement importante. Il est cependant possible qu'elle soit techniquement et économiquement envisageable dans un proche avenir et que la présente invention englobe une telle méthode.

La Demanderesse a par conséquent utilisé et amélioré une technique permettant de transformer les coordonnées image en coordonnées cylindriques utilisant une taille mémoire relativement restreinte.

En fait, s'agissant des coordonnées cylindriques (R, H, $\theta$), le problème se pose essentiellement pour la détermination des coordonnées R et H, l'angle $\theta$ étant l'angle entre l'axe des X' et l'axe des X (figure 2), cet angle étant donné par la position du moteur pas à pas animant le siège 10'.

Le modèle mathématique suivant est utilisé :

$$(1) \qquad R = \frac{\alpha_1 \mathrm{Lig} + \alpha_2 \mathrm{Col} + \alpha_3}{\alpha_7 \mathrm{Lig} + \alpha_8 \mathrm{Col} + 1} \qquad H = \frac{\alpha_4 \mathrm{Lig} + \alpha_5 \mathrm{Col} + \alpha_6}{\alpha_7 \mathrm{Lig} + \alpha_8 \mathrm{Col} + 1}$$

Le problème qui se pose donc ici est donc de déterminer les coefficients de transformation $\alpha_i$ à appliquer aux coordonnées ligne-colonne de tous les points de l'espace susceptibles d'être filmés par les caméras 13a, 13b, pour obtenir les coordonnées cylindriques correspondantes pour chacun de ces points.

A cet effet, on procède à une étape de "calibration" de chacune des caméras 13a, b, in situ. C'est l'objet de la phase de calibration décrite ci-après au paragraphe 3.1.

Une fois ces coefficients de transformation déterminés comme il sera décrit ci-après, on peut procéder grâce aux équations indiquées sous (1) ci-dessus à la transformation proprement dite des coordonnées ligne-colonne des points délivrés par le convertisseur 15 pour chacun des systèmes de vision 13a, 13b. On génère ainsi deux fichiers dits "spatiaux" FSa et FSb (Cf. paragraphe 3.2. ci-après).

### 3.1. Phase de calibration

La méthode de base utilisée pour la calibration est la suivante :

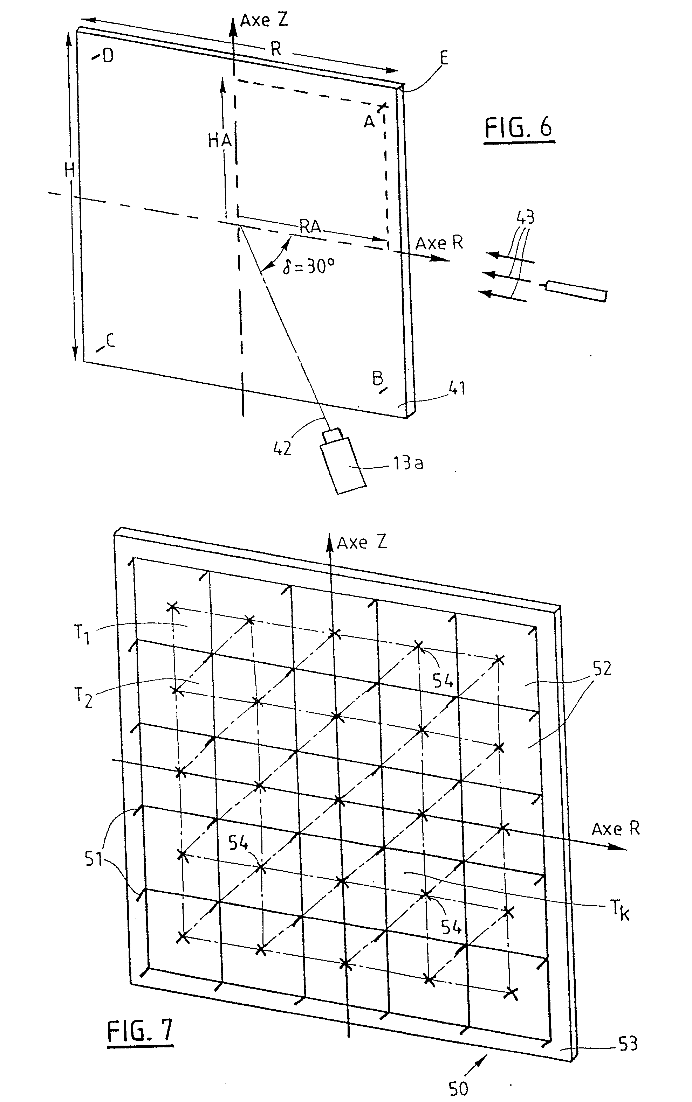

On utilise une mire de calibration telle qu'illustrée en figure 6, comportant une plaque rectangulaire 41 de hauteur H et de largeur R dans l'exemple considéré R = H = 50 cm) et d'épaisseur e (1 cm ici). La plaque 41 est munie de quatre piges constituées par des cylindres métalliques (référencées A, B, C, D dans l'exemple) de rayon r et de hauteur h prédéterminés (dans l'exemple considéré r = 1 mm et h = 2 cm). On connaît la position spatiale des piges A - D et, notamment, leurs coordonnées (RA, HA), (RB, HB), (RC, HC) et (RD, HD).

EP 0 348 247 A1

Sur la figure 6, on a illustré l'axe des Z, le long duquel les coordonnées H sont mesurées et un axe R, perpendiculaire à l'axe des Z, le long duquel les coordonnées R peuvent être mesurées. On a également illustré, sur cette figure, les coordonnées (RA, HA) de la pige A.

On filme la mire ainsi constituée au moyen de chacune des caméras 13. On a illustré sur cette figure, sous la référence 42, l'axe de vision de la caméra 13a et sous la référence 43, le plan lamellaire de lumière issu du laser. Ce plan lamellaire est parallèle à la plaque 41, tandis que l'axe de vision 42 de la caméra 13 s'incline de 30° par rapport au plan lamellaire de lumière et intercepte la plaque 41 au barycentre 0 des quatre piges A - D.

Le système de vision enregistre donc les coordonnées image correspondant aux quatre piges : (ColA, LigA), (ColB, LigB), (ColC, LigC) et (ColD, LigD).

A partir des équations (1) ci-dessus, il est possible de former un système de huit équations à huit inconnues (les $\alpha_i$) et comme parmi les quatre points A - D, il n'existe aucun sous-ensemble de trois points alignés, le système d'équations admet une solution à la fois unique et non aberrante.

Le modèle mathématique (1) ci-dessus utilisé avec les $\alpha_i$ ainsi déterminés donne à l'évidence une solution exacte pour les quatre points A-D. Cependant, à cause des non-linéarités optiques du système de vision, la précision des coordonnées RH pour les autres points se dégrade. On a observé que l'erreur est en fait minimale au barycentre des autres points A-D.

Pour minimiser cette erreur, selon une caractéristique de cet aspect de l'invention, on procède de le façon suivante. On utilise une mire de calibration se présentant sous la forme d'une plaque carrée 53 dont les dimensions correspondant à la plus grande dimension de l'objet ou du sujet que l'on souhaite reproduire en trois dimensions (voir figure 7). Dans l'exemple considéré, la mire présente une hauteur et une largeur de 1 m. On dispose une pluralité de piges 51 en ligne et en colonne de façon à définir une pluralité de carrés 52. Dans le mode de réalisation choisi et représenté, on divise ainsi la plaque 53 de calibration en 25 carrés sur chacun des coins desquels une pige de calibration 51 est disposée. Chaque pige est caractérisée par ses coordonnées ligne - colonne (i, j). Ainsi, la pige (i, j) est la pige de la ième ligne et de la jème colonne.

On met en place la mire de calibration 50 comme montré en figure 6. On a illustré sur la figure 7 un axe des Z et un axe R respectivement parallèles à deux côtés perpendiculaires de la mire de calibration 51. En connaissant les coordonnées (R,H) des piges 51, on peut déterminer, pour chacun des barycentres 54 de chacun des carrés 52, les coefficients $\alpha_i$ afférents au carré considéré, en appliquant les équations (1) ci-dessus. On affecte alors à chacun des barycentres 54 les coefficients $\alpha_i$ correspondants.

On considère ensuite les triangles $T_k$ dont les sommets sont constitués par les barycentres 54 de carrés voisins. Ces triangles $T_k$ sont illustrés en figure 7 en traits mixtes. Les triangles $T_k$ sont ici au nombre de 32 et sont numérotés (k variant de 1 à 32).

Pour assurer une continuité du modèle mathématique utilisé, il est considéré que les coefficients $\alpha_i$ sont des polynomes de degré 1 en Col, Lig sur chacun des triangles $T_k$. Ainsi, les coefficients $\alpha_i$ sont de la forme :
$$(2) \quad \alpha_i = \beta_{i1}Col + \beta_{i2}Lig + \beta_{i3}$$

Pour chacun des triangles $T_k$, on connaît les coefficients $\alpha_i$ permettant de déterminer les coordonnées R, H de chacun de ses sommets.

On dispose donc, pour chaque triangle $T_k$, et pour chaque $\alpha_i$ afférent à un sommet, d'un système de trois équations à trois inconnues (les $\beta_{ij}$) que l'on peut résoudre pour déterminer ces inconnues.

En résumé, la méthode est donc la suivante :
- pour chacun des barycentres 54, on détermine les coefficients $\alpha_i$ permettant de déterminer les coordonnées spatiales (R, H), compte tenu des coordonnées image (Col, Lig) enregistrées par le système de vision, et compte tenu du fait que l'on connaît les coordonnées spatiales (R, H) des piges 51 visionnées par le système de vision,
- à partir des coefficients $\alpha_i$ affectés à chacun des barycentres, on détermine les coefficients $\beta_{ij}$ pour les triangles $T_k$ considérés.

Par conséquent, on dispose ainsi d'une méthode d'interpolation permettant de faire varier continuellement les coefficients $\alpha_i$, compte tenu de la position des points disposés à l'intérieur d'un triangle $T_k$ donné et, notamment de leur rapprochement ou de leur éloignement d'un sommet considéré.

Avec chacune des caméras 13a, 13b, on filme la mire 50 une fois pour toutes, et on procède aux calculs des coefficients $\beta_{ij}$ afférents à chacune des caméras.

Une fois que les coefficients $\beta_{ij}$ ont été déterminés pour les deux caméras, celles-ci sont alors "calibrées" et on peut transformer les coordonnées (Col, Lig) issues du convertisseur 15 en coordonnées spatiales (R,H).

3.2. Constitution des fichiers associés à chaque caméra

Comme expliqué plus haut, chaque caméra 13a, 13b filme une série de profils source, chacun des profils image résultant étant échantillonné par le convertisseur 15 de telle sorte qu'en sortie de ce convertisseur, on dispose des coordonnées (Col,Lig) d'un ensemble d'échantillons permettant de reconstituer chacun des profils considérés.

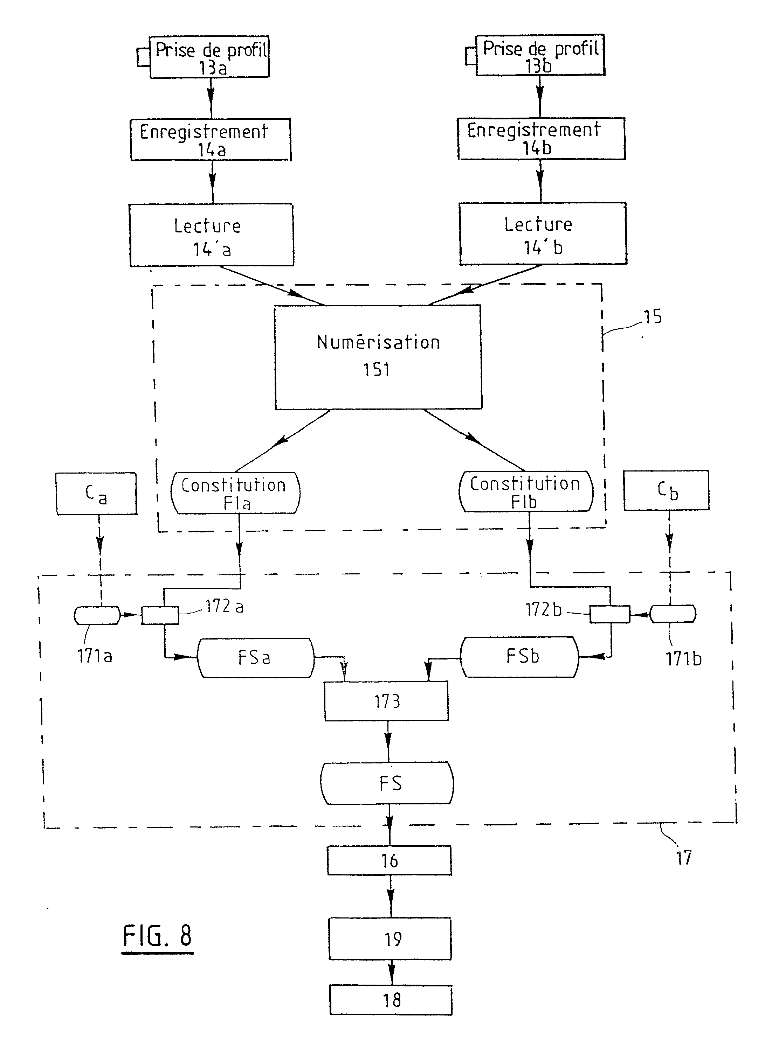

La figure 8 est un schéma fonctionnel des principaux moyens mis ici en oeuvre. La fonction des caméras 13a, 13b et celle de leurs magnétoscopes associés 14a, 14'a, 14b, 14'b y ont été représentés de façon schématique. Sur cette figure, on a également représenté schématiquement les fonctions principales effectuées par le convertisseur 15 et les moyens transformation 17.

Le convertisseur 15 comporte essentiellement des moyens de conversion analogique-numérique fonctionnant selon le principe décrit dans le brevet français 81.24418 cité plus haut. Ces moyens de

9

EP 0 348 247 A1

conversion portent la référence 151. Les coordonnées (Col,Lig) pour chacun des points des profils image délivrées par chacune des caméras sont en fait enregistrées dans deux fichiers image Fla, Flb. Le fichier Fla est associé au système de vision comportant la caméra 13a, le magnétoscope 14a et le magnétoscope 14'a, tandis que le fichier Flb est associé au deuxième système de vision (caméra 13b, magnétoscopes 14b et 14'b).

Ainsi, seules les coordonnées des points en provenance de ce second système de vision sont enregistrées dans le fichier Flb, tandis que seules les coordonnées des points issus du premier système de vision sont enregistrées dans le fichier Fla.

Les moyens de transformation 17 comportent un fichier de transformation 171a (171b) associé à chacune des caméras 13a, 13b. Chaque fichier 171a (171b) contient un nombre d'enregistrements égal au nombre de triangles $T_k$ considéré (ici 32). Chaque enregistrement comporte :
- le numéro du triangle $T_k$ considéré,
- les coordonnées de chacun des sommets de ce triangle (barycentres 54),
- les coefficients $\beta_{ij}$ associés à ce triangle pour la caméra considérée 13a(13b) (obtenus lors de la calibration de ces caméras). Comme exposé plus haut, la calibration de chaque caméra est faite in situ préalablement à toute exploitation commerciale du procédé. Sur la figure 8, la calibration des caméras, permettant de constituer les fichiers 171a, 171b, est schématisée en $C_a$ et $C_b$).

Les moyens de transformation 17 comportent également, d'une part un fichier spatial FSa constitué des coordonnées cylindriques obtenues après transformation des coordonnées image contenues dans le fichier image Fla et, d'autre part, un fichier FSb constitué des coordonnées cylindriques obtenues après transformation des coordonnées image dans le fichier image Flb.

A partir des coordonnées image d'un point quelconque, contenues dans l'un des fichiers Fla ou Flb, on calcule, au moyen d'une méthode itérative, les coordonnées spatiales R, H correspondant à ce point.

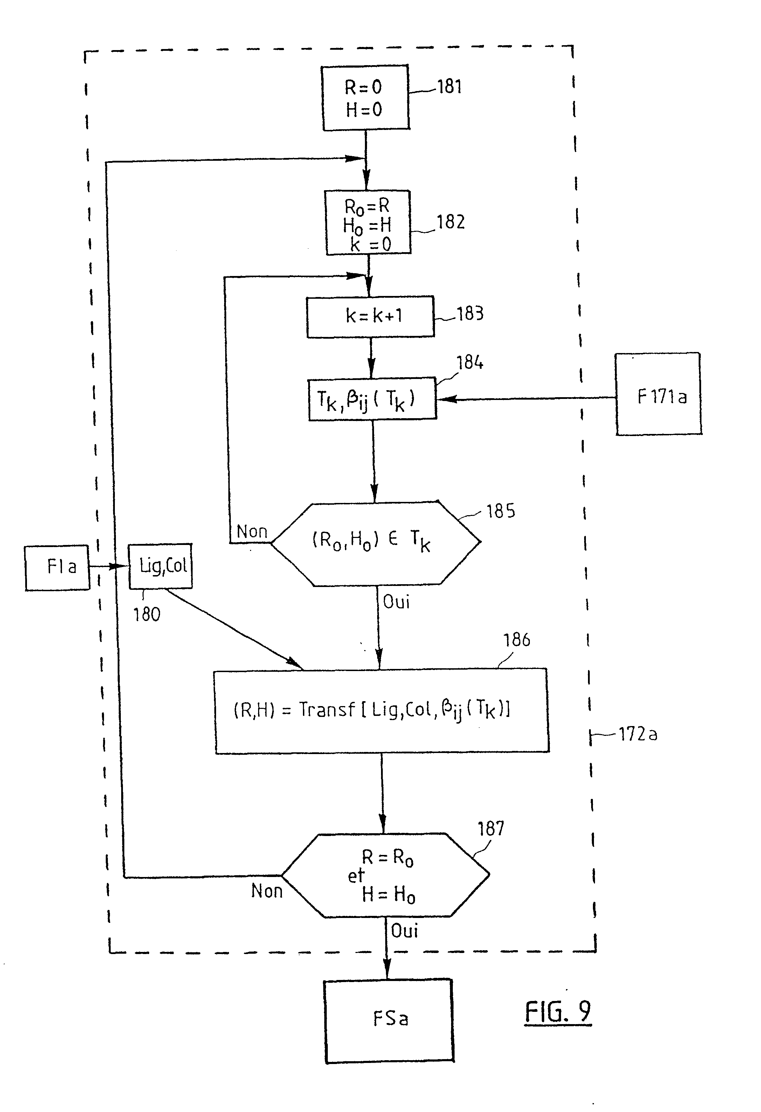

En figure 8, l'étape itérative de transformation a été schématisée en 172a, pour les coordonnées issues du fichier Fla, et en 172b pour les coordonnées issues du fichier Flb. La figure 9 représente un organigramme simplifié de transformation, réalisant l'étape 172a ou 172b. On ne décrira que l'étape 172a, l'étape 172b étant identique.

On traite chacun des points contenus dans le fichier Fla de façon séquentielle. Le traitement d'un point déterminé, ayant des coordonnées (Lig, Col) comporte une lecture dans le fichier Fla, et une inscription en mémoire, comme schématisé en 180. L'étape de transformation décrite vise à calculer les coordonnées (R, H) correspondant aux coordonnées (Lig, Col). Pour ce faire, lors d'une première étape d'initialisation 181, on initialise au départ de chaque traitement d'un point image déterminé, en mettant la mémoire qui doit contenir les coordonnées du point source (R,H) à zéro. Le processus itératif est alors le suivant : en 182, lors d'une seconde étape d'initialisation, on initialise deux variables intermédiaires ($R_o$, $H_o$) en mettant ces variables intermédiaires égales au contenu de la mémoire (R,H). La variable K, qui correspond au numéro du triangle est, elle aussi, initialisée à zéro. En 183, on incrémente cette variable k. En 184, on vient lire dans le fichier 171a les coordonnées du triangle $T_k$, ainsi que le jeu du coefficient $\beta_{ij}$ associé au triangle $T_k$ considéré.

En 185, on procède à un test d'appartenance pour déterminer si le point ayant pour coordonnées les variables intermédiaires ($R_o$, $H_o$) appartient ou non au triangle $T_k$. Pour ce faire, on fait des tests de comparaisons successives de coordonnées selon une méthode de recherche classique bien connue de l'homme de l'art qui sait, connaissant les coordonnées d'un point dans un plan déterminé, à quelle région de ce plan appartient ce point. Si le test 185 est négatif, on revient en 183 où l'on incrémente la variable k. Lorsque le test est positif, c'est-à-dire que l'on a déterminé le triangle $T_k$ auquel appartient le point ayant les coordonnées intermédiaires ($R_o$, $H_o$), on passe à une étape de transformation 186.

En 186, on affecte aux coordonnées (R, H) contenues en mémoire de nouvelles valeurs correspondant à la transformée des coordonnées (Col,Lig), au moyen des équations (1) et (2) écrites plus haut, permettant de calculer à partir des coefficients $\beta_{ij}$ lus en 184 les coordonnées (R, H) considérées.

En 187, on procède au test consistant à déterminer si les coordonnées (R, H) sont respectivement égales ou non aux coordonnées intermédiaires ($R_o$, $H_o$). Dans la négative, on revient à l'étape 182 ; si le test 187 est positif, cela signifie que les coordonnées (R, H) en mémoire sont effectivement celles du point source du point image (Lig, Col) traité.

On inscrit ces coordonnées (R, H) dans le fichier spatial FSa.

En résumé, au cours de l'étape itérative de transformation, il est effectué les opérations suivantes :
- une opération de recherche au cours de laquelle on recherche la zone d'interpolation $T_k$ à laquelle le point source appartient, ainsi que les coefficients d'interpolation $\beta_{ij}$ associés à cette zone. On observera qu'au lieu d'effectuer cette recherche dans l'espace source, comme dans le mode de réalisation décrit, il est possible, sans sortir du cadre de l'invention, de l'effectuer dans le plan image de la caméra 13a ou 13b,
- une opération de calcul au cours de laquelle on calcule les coordonnées spatiales (R,H) par application concomitante des formules de transformation (1) et d'interpolation (2).

On constitue de même un fichier spatial FSb à partir des coordonnées contenues dans le fichier Flb.

Il convient d'observer que pour un même point spatial, les coordonnées cylindriques déterminées à partir des coordonnées image dans le fichier Fla et dans le fichier Flb devraient être les mêmes. En pratique, elles seront identiques aux erreurs optiques et d'arrondi près.

On observera que le procédé de transformation décrit ci-dessus utilise peu de mémoire puisqu'en l'espèce, il suffit de mémoriser par triangle $T_k$ :
- son numéro (une information),

10

- les coordonnées spatiales de ses sommets (six informations),
- les $\beta_{ij}$ associés (24 informations),

soit trente et une informations par triangle. Il y a donc un total de 992 informations à mémoriser, ce qui est relativement faible à comparer aux informations qui devraient être mémorisées s'il fallait mémoriser dans une seule mémoire les coordonnées transformées pour chacun des 1024 pixels de chacune des 316 lignes des caméras 13, soit au total 323.584 informations).

Les coordonnées spatiales contenues dans les fichiers FSa et FSb sont fusionnées en 173 en un seul fichier FS. Cette fusion permet de compléter avec les coordonnées des points de l'un des fichiers les coordonnées absentes dans l'autre.

C'est à ce niveau du procédé qu'est solutionné le problème des points qui n'ont pu être filmés par les deux caméras (parties cachées) : les parties cachées pour une caméra ont pu être filmées par l'autre (voir figure 2). En procédant à la fusion des fichiers FSa et FSb, on réalise un fichier unique FS dans lequel en théorie l'ensemble de la surface du buste est échantillonné (sous réserve des points manquants ou aberrants dans les deux fichiers pour les raisons mentionnées plus haut).

La fusion s'opère en utilisant l'un des fichiers, le fichier FSa, comme fichier pilote et en complétant les coordonnées manquantes dans ce fichier par celles existant éventuellement dans le fichier FSb.

### 4. Homogénéisation des points d'un profil

Comme expliqué plus haut, à l'appui de la figure 4, chaque profil $\theta_n$ peut :
- soit présenter des absences de points,
- soit comporter des points aberrants.

Le but de l'étape présentement décrite, qui est dite "d'homogénéisation", est d'éliminer les points aberrants et de reconstituer les coordonnées des points manquants. Cette étape comporte une opération dite "d'intégration", une opération de "filtrage" et une opération dite de "reconstitution".

### 4.1 Opération d'intégration

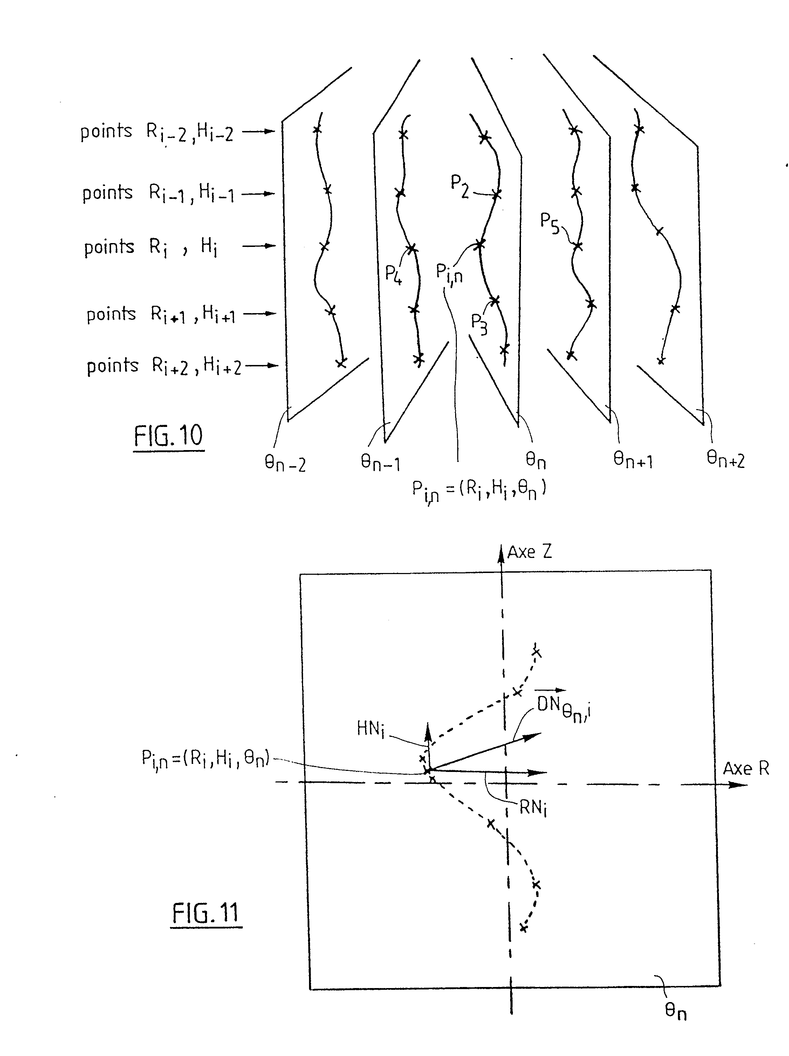

En figure 10, il est illustré cinq profils source ($\theta_{n-2}$, $\theta_{n-1}$, $\theta_n$, $\theta_{n+1}$, $\theta_{n+2}$). On observe que ces profils concernent cinq positions successives du siège 10'. Ils ont été illustrés dans le référentiel associé au buste 20 (X', Y', Z).

Le profil source en cours de traitement est le profil $\theta_n$. Pour chacun des points traités : $P_{i,n} = (R_i, H_i, \theta_n)$, on effectue les opérations suivantes :
- on détermine tout d'abord les points voisins du point $(R_i, H_i, \theta_n)$ considéré. A cet égard, on considère les $2p+1$ profils allant de $\theta_{n-p}$ à $\theta_{n+p}$. Dans l'exemple illustré en figure 10, $p = 2$ et par conséquent, on considère les cinq profils allant de $\theta_{n-2}$ à $\theta_{n+2}$.

Sur chaque profil source $\theta_j$ ainsi considéré, on sélectionne les $2k+1$ points allant de $(R_{i-k}, H_{i-k}, \theta_j)$ à $(R_{i+k}, H_{i+k}, \theta_j)$. Dans l'exemple considéré, en figure 10, on a choisi pour valeur de $k$ : $k = 2$.

Cela détermine ainsi $(2p+1) \times (2k+1)$ points voisins de $(R_i, H_i, \theta_n)$ y compris ce point en cours de traitement.

Dans le mode de réalisation représenté, il y a donc un total théorique de 25 points voisins au point $P_{i,n}$ en cours de traitement, y compris ce dernier.

On calcule ensuite la moyenne $\overline{R}$ des ordonnées en R et la moyenne $\overline{H}$ des ordonnées en Z de chacun de ces 25 points.

Dans l'hypothèse où des points sont manquants, la moyenne est effectuée en diminuant le diviseur commun (25 dans un cas normal), d'autant d'unités que de points sont manquants.

Si le point "traité" $P_{i,n}$ n'est pas manquant (bit 14 à 1 dans le tableau I), on effectue l'opération de filtrage.

### 4.2 Opération de filtrage

Le filtrage a pour but de permettre l'élimination des points aberrants. Pour chacun des points traités, on calcule la valeur absolue $|R_i - \overline{R}|$.

Si cette valeur est supérieure à une valeur d'erreur donnée E, paramétrable, on élimine le point $(R_i, H_i, \theta_n)$.

La valeur donnée E est déterminée par l'expérience, compte tenu de l'objet que l'on cherche à reproduire. S'agissant par exemple du visage d'une personne, pour certaines zones, on sait que le risque d'obtenir des points aberrants est particulièrement élevé et que ces points aberrants risquent d'être disposés à une distance relativement importante du profil. Dans un tel cas, on choisira pour valeur E, une valeur de quelques centimètres, 3 cm par exemple.

En revanche, dans d'autres cas, les erreurs et les points aberrants seront peu nombreux et en tous cas relativement proches du profil. Dans un tel cas, on choisira comme valeur E, une valeur faible de l'ordre de quelques millimètres, 3 mm par exemple.

On observera en plus, selon une caractéristique de l'invention, que ladite valeur donnée E peut être paramétrable compte tenu du profil analysé. Ainsi, dans certaines zones du visage, telles que le nez, on choisira une valeur E relativement importante, puisque le profil est susceptible d'avoir d'importantes variations de sa coordonnée R, tandis que, pour les profils concernant la nuque, on choisira une valeur E relativement faible, puisque le profil n'a que des variations de sa coordonnée R de faible amplitude.

### 4.3. Opération de reconstitution

Dans le cas où le point $(R_i, H_i, \theta_n)$ "traité" est manquant (bit 14 à 0, Cf. tableau I), ou s'il est filtré, comme exposé ci-dessus, on effectue l'opération dite de reconstitution au cours de laquelle on affecte au point $(R_i, H_i, \theta_n)$, les valeurs moyennes calculées $\overline{R}, \overline{H}$, lors de l'étape d'initialisation.

La figure 5 est une vue correspondant à la figure 4, dans laquelle les points représentés sont les points source en coordonnées cylindriques, et dans laquelle les points aberrants et manquants ont été reconstitués, comme exposé ci-dessus (points $P_r$).

Le fichier FS est complété au fur et à mesure du traitement des points $(R_i, H_i \, \theta_n)$ par les coordonnées de tous les points $P_r$ reconstitués.

On notera que l'étape d'homogénéisation d'un profil $\theta_n$ qui vient d'être décrite met en oeuvre les coordonnées cylindriques, après reconstitution des coordonnées cylindriques du point source à partir des coordonnées de son image.

Dans un autre mode de réalisation de la présente invention, il est tout à fait envisageable d'intervertir les étapes de reconstitution et d'homogénéisation et de procéder à l'étape d'homogénéisation en coordonnées image puis de procéder ensuite à une transformation ou à la reconstitution des coordonnées cylindriques de l'ensemble des points source à partir des points image d'origine ou des points "image" reconstitués. On observera en effet que, d'une manière générale, la phase d'homogénéisation est une phase au cours de laquelle pour chaque point traité (que ce dernier soit considéré dans l'espace source ou dans le plan image), on considère un nombre prédéterminé de points voisins, on calcule les coordonnées moyennes de ces points, si le point traité est absent, ou si l'une au moins de ses coordonnées diffère de la coordonnée moyenne correspondante d'un écart supérieur à une valeur prédéterminée (E), on affecte au point traité lesdites coordonnées moyennes.

### 5. Détermination de la direction de l'arbre porte-outil

L'outil utilisé se présente essentiellement sous la forme d'une fraise disposée en bout d'un arbre appartenant à un robot susceptible de commander la position de cet arbre dans l'espace.

On conçoit que la position de la fraise doit être déterminée au moins par trois coordonnées. En l'espèce, les coordonnées $(R, H, \theta)$ seront utilisées.

Mais il faut, de surcroît, que l'arbre portant la fraise soit disposé selon une direction sensiblement normale à la surface à reproduire, de telle sorte que la matière soit attaquée sous un angle favorable.

Pour ce faire, le robot doit être capable de déterminer non seulement la position de la fraise selon les trois coordonnées cylindriques, mais en plus la direction générale de l'arbre (deux degrés de liberté supplémentaires).

L'arbre porte-outil sera orienté selon une direction dite normale à la surface si deux conditions se trouvent réunies :
- d'une part, il faut que la projection de l'arbre dans le plan $\theta_n$ auquel appartient le point traité: $P_{i,n} : (R_i, H_i, \theta_n)$ soit normale au profil auquel appartient ce point,
- et, d'autre part, que la projection de l'arbre dans un plan perpendiculaire sécant $S_i$, passant par le point traité $P_{i,n}$ soit également normale à la trace de la surface à reproduire dans ce plan sécant. Dans la suite, on appellera "trace sécante" la trace laissée dans le plan $S_i$ par la surface à reproduire.

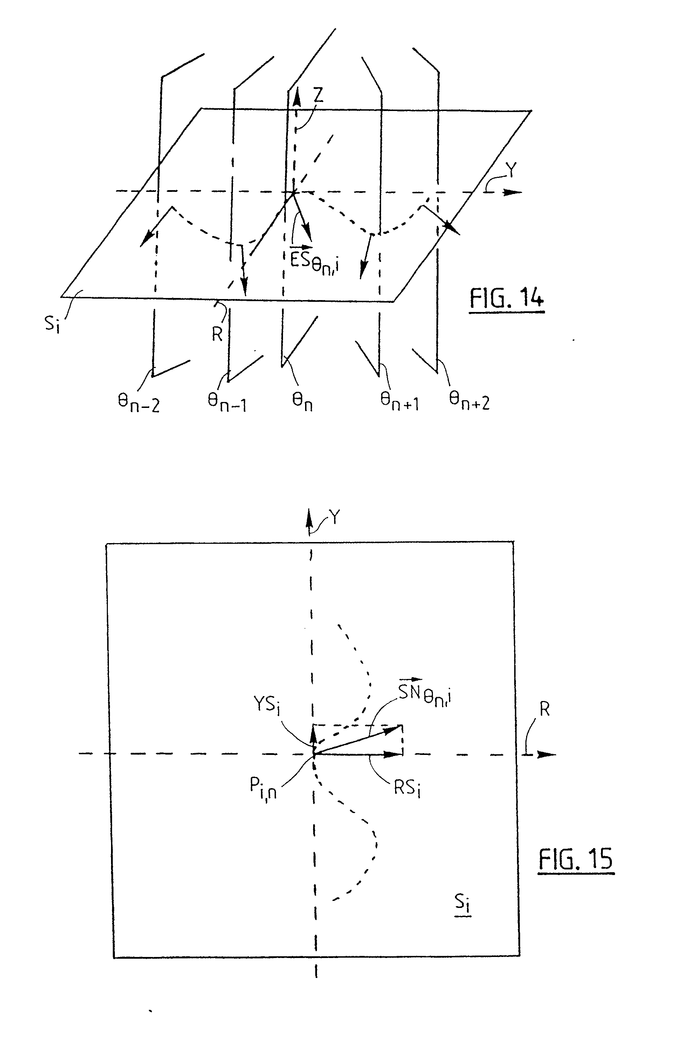

En figure 11, on a illustré sous la référence $\overrightarrow{DN}_{\theta n,i}$ la projection dans le plan $\theta_n$ de la normale à la surface au point $P_{i,n}$, tandis qu'en figure 15, on a représenté sous la référence $\overrightarrow{SN}_{\theta n,i}$ la projection de la normale à cette surface au point $P_{i,n}$ dans le plan $S_i$.

Ainsi, en plus des trois degrés de liberté nécessaires pour commander la position de l'axe de l'outil, le robot qui commande cette position, ainsi que la position de l'arbre, doit être capable de maîtriser deux degrés de liberté supplémentaires. Les deux coordonnées supplémentaires que le robot doit maîtriser sont des rotations. L'une autour de l'axe des Z (perpendiculaire au plan $S_i$), l'autre autour d'un axe perpendiculaire à l'axe des Z, l'axe Y en l'espèce.

Le robot et l'outil utilisés sont ici du type NC-TRIAX-R6-2-TWIST, fabriqué par la Société italienne CMS.

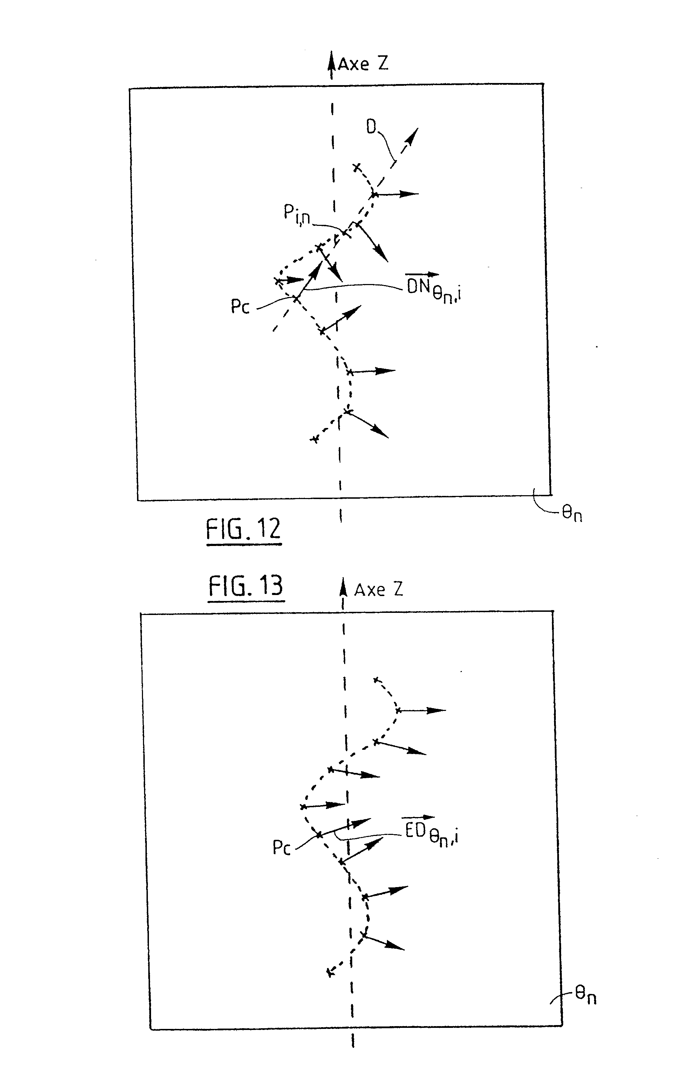

Un problème se pose lorsque la surface à usiner comporte plusieurs parties concaves, l'une de celles-ci étant représentée en figures 12 et 14. En effet, dans une telle partie concave, il risque de se produire une collision outil-matière. Ainsi, figure 12, au point critique Pc, la direction de la projection de la normale est D. Or, cette direction intercepte le profil non seulement au point Pc mais également au point Pin de telle sorte que si l'arbre de l'outil prenait une telle direction, il y aurait collision avec la matière.

Le même problème se pose d'ailleurs dans le plan $S_i$, figure 14.

Pour pallier cet inconvénient, il faut déterminer une direction dite de "normale rectifiée" permettant d'éviter cette collision et, dans ce but, s'écartant de la normale. Cette direction a été illustrée pour le point Pc en figure 13, sous la référence $\overrightarrow{ED}_{\theta n,i}$ et en figure 14 (dans le plan $S_i$) sous la référence $\overrightarrow{ES}_{\theta n,i}$. En conséquence, l'étape de détermination de la direction de l'outil se décompose en trois sous-étapes :
- estimation de la normale $\overrightarrow{N}_{\theta n,i}$,
- détection des parties concaves dans le plan $\theta_n$ et calcul de la direction de la projection des normales rectifiées dans le plan $\theta_n$,
- détection des parties concaves dans le plan $S_i$ et calcul de la direction de la projection des normales rectifiées dans le plan $S_i$.

## 5.1. Estimation de la normale

La détermination de la normale du point traité $P_{i,n}$ va se faire, compte tenu des quatre points les plus proches P2-P5, figure 10. Pour déterminer cette normale : on procède au calcul des produits vectoriels suivants :

$$\vec{N_1} = \vec{P_tP_2} \wedge \vec{P_tP_4}$$
$$\vec{N_2} = \vec{P_tP_4} \wedge \vec{P_tP_3}$$
$$\vec{N_3} = \vec{P_tP_3} \wedge \vec{P_tP_5}$$
$$\vec{N_4} = \vec{P_tP_5} \wedge \vec{P_tP_2}$$

On norme les vecteurs $\vec{N_1} - \vec{N_4}$, ce qui donne les vecteurs

$$\vec{NM_1} - \vec{NM_4} \quad \left(\vec{NM_i} = \frac{\vec{N_i}}{||N_i||}\right)$$

On calcule la somme des quatre vecteurs normés:

$$\vec{NM_1} + \vec{NM_2} + \vec{NM_3} + \vec{NM_4}$$

ce qui permet d'obtenir un vecteur de direction moyenne aux quatre vecteurs normés précédents. La direction du vecteur résultant est considérée comme étant la "normale" à la surface au point en cours de traitement $P_{i,n}$.

Le vecteur résultant est ensuite normé, ce qui donne le vecteur $\vec{N}_{\theta n,i}$.

Le traitement ci-dessus s'effectue pour chacun des points $(R_i, H_i, \theta_n)$ du fichier FS.

On crée un fichier FN comportant, pour chacun des points $P_{i,n}$, les coordonnées du vecteur associé $\vec{N}_{\theta n,i}$.

## 5.2 Détermination des parties concaves dans $\theta_n$ et calcul de la projection de la normale rectifiée dans ce plan

On considère les vecteurs et les coordonnées suivants :

- $\vec{DN}_{\theta n,i}$ : projection normée de $\vec{N}_{\theta n,i}$ dans le plan $\theta_n$,
- $RN_i$ et $HN_i$ : les composantes de ce vecteur dans le plan $\theta_n$ (figure 11).

On considère les deux points voisins de $(R_i, H_i, \theta_n)$ respectivement $(R_{i-1}, H_{i-1}, \theta_n)$ et $(R_{i+1}, H_{i+1}, \theta_n)$ sur le profil $\theta_n$ et la projection normée $\vec{DN}_{\theta n,i-1}$ et $\vec{DN}_{\theta n,i+1}$ associée à ces points.

On calcule le produit vectoriel suivant :

$$(\vec{DN}_{\theta n, i+1} \wedge \vec{DN}_{\theta n, i-1})$$

ce qui permet d'obtenir un coefficient de convexité $QD_i$ associé au point en traitement $(R_i, H_i, \theta_n)$ :

$$QD_i = (RN_{i+1} * HN_{i-1}) - (RN_{i-1} * HN_{i+1}) \quad (3.1)$$

Si le coefficient $QD_i$ est positif, cela signifie que le méridien est convexe au point traité. S'il est négatif, cela signifie que le méridien est concave.

Si le méridien est convexe, on inscrit dans le fichier FS les coordonnées du vecteur $\vec{DN}_{\theta n,i}$ associé au point traité $(R_i, H_i, \theta_n)$.

Si le coefficient $QD_i$ est négatif, on calcule le vecteur :

$$\vec{DN}_{\theta n,i-1} + \vec{DN}_{\theta n,i+1} \quad (3.2)$$

On norme ce vecteur, ce qui donne le vecteur $\vec{ED}_{\theta n,i}$

On inscrit dans le fichier FS les coordonnées du vecteur $\vec{ED}_{\theta n,i}$.

On traite tous les points $P_{i,n}$ du fichier FS.

On dispose à ce moment d'un fichier FS comportant, d'une part les coordonnées spatiales de chacun des points $P_{i,n}$ et, d'autre part associées à chacun des points considérés, les coordonnées :

- soit de la projection $\vec{DN}_{\theta n,i}$ de la normale $\vec{N}_{\theta n,i}$ dans le plan $\theta_n$,
- soit du vecteur $\vec{ED}_{\theta n,i}$ qui est une estimation de la direction de la projection de la direction de l'arbre porte-outil dans le plan $\theta_n$, pour minimiser le risque d'interférence entre porte-outil et matière, mentionné plus haut. $\vec{ED}_{\theta n,i}$ est appelé "normale rectifiée dans le plan $\theta_n$".

Lorsque l'ensemble des points est traité, on recommence le traitement ci-dessus, en utilisant, dans les formules (3.1) et (3.2) ci-dessus, soit les coordonnées du vecteur $\vec{DN}_{\theta n,i}$ ou $\vec{ED}_{\theta n,i}$ associées à chacun des points et on modifie, dans le fichier FS, les valeurs des vecteurs $\overrightarrow{ED}_{\theta\, n,i}$.

Ce processus est recommencé un nombre prédéterminé de fois (trois dans cet exemple). En réalité, la direction $\overrightarrow{ED}_{\theta\, n,i}$, estimée au point considéré après trois itérations, est telle que le risque de collision outil-matière mentionné plus haut, dû à la concavité du méridien au point considéré, est minimisé.

### 5.3 Détermination des parties concaves dans $S_i$ et calcul de la projection de la normale rectifiée dans ce plan

On rappelle tout d'abord que le plan $S_i$ est un plan perpendiculaire aux divers plans $\theta_n$ et interceptant l'axe des Z au niveau de la coordonnée $H_i$, figures 14 et 15. Ce plan est parallèle au plan XY illustré en figure 3.

On considère également la trace sécante laissée par la surface du buste 20 dans le plan $S_i$ : $S_i$ désignant donc soit le plan, soit la trace sécante.

On considère les vecteurs et les coordonnées suivantes :
- $\overrightarrow{SN}_{\theta\, n,i}$ : projection normée de $\vec{N}_{\theta\, n,i}$ dans le plan $S_i$,
- $RS_i$ et $YS_i$ les composantes de ce vecteur dans le plan $S_i$.

On considère un point traité $(R_i, H_i, \theta_n)$. On considère les deux points voisins de ce point respectivement $(R_i, H_i\, \theta_{n-1})$ et $(R_i, H_i, \theta_{n+1})$ sur la trace sécante $S_i$ et la projection normée $\overrightarrow{SN}_{\theta\, n-1,i}$ et $\overrightarrow{SN}_{\theta\, n+1,i}$ associée à ces points.

On calcule le produit vectoriel suivant :

$$\overrightarrow{SN}_{\theta n-1,i} \; ^\wedge \; \overrightarrow{SN}_{\theta n+1,i}$$

ce qui permet d'obtenir un coefficient $QS_i$ associé au point en traitement $R_i, H_i\, \theta_n$ :
$QS_i = (RS_{i+1} * YS_{i+1}) - (RS_{i+1} * YS_{i-1})$     (4.1)

Si le coefficient $QS_i$ est positif, cela signifie que la trace sécante est convexe au point traité. S'il est négatif, cela signifie que la trace est concave.

Si la trace est convexe, on inscrit dans le fichier FS les coordonnées du vecteur $\overrightarrow{SN}_{\theta n,i}$ associé au point traité $(R_n, H_i, \theta_n)$.

Si le coefficient $QS_i$ est négatif, on calcule le vecteur
$\overrightarrow{SN}_{\theta n-1,i} + \overrightarrow{SN}_{\theta n+1,i}$     (4.2)
On nomme ce vecteur, ce qui donne le vecteur $\overrightarrow{ES}_{\theta n,i}$.
On inscrit dans le fichier FS les coordonnées du vecteur $\overrightarrow{ES}_{\theta n,i}$.
On traite tous les points $P_{i,n}$ du fichier FS.

On dispose à ce moment d'un fichier FS comportant, d'une part les coordonnées spatiales de chacun des points, et les coordonnées de la projection dans le plan $\theta_n$ de la normale réelle ou rectifiée, (respectivement $\overrightarrow{DN}_{\theta\, n,i}$ et $\overrightarrow{ED}_{\theta\, n,i}$, et, d'autre part, les coordonnées :
- soit de la projection $\overrightarrow{SN}_{\theta n,i}$ de la normale de $\vec{N}_{\theta n,i}$ dans le plan $S_i$,
- soit du vecteur $\overrightarrow{ES}_{\theta n,i}$ qui est une estimation de la direction de la projection de la direction de l'arbre porte-outil dans le plan $S_i$ minimisant le risque d'interférence entre le porte-outil et la matière mentionnée plus haut. $\overrightarrow{ES}_{\theta n,i}$ est appelé "normale rectifiée dans le plan $S_i$".

Comme précédemment, ce processus est recommencé un nombre prédéterminé de fois (trois dans cet exemple). Ainsi, la direction $\overrightarrow{ES}_{\theta n,i}$ estimée au point considéré, après trois itérations, est telle que le risque de collision outil-matière mentionné plus haut est minimisé.

### 5.4 Détermination finale de la direction de l'arbre porte-outil

Lorsque l'étape définie au paragraphe 5.3 précédent est terminée, le fichier FS comporte finalement pour chaque point $P_{i,n}$ :
- les trois coordonnées du point $P_{i,n}$ $(R_i, H_i, \theta_n)$,
- les deux coordonnées dans le plan $\theta_n$ du vecteur $\overrightarrow{DN}_{\theta\, n,i}$ ou du vecteur rectifié $\overrightarrow{ED}_{\theta\, n,i}$. Ces deux coordonnées définissent la direction de l'outil dans le plan $\theta_n$.
- les deux coordonnées dans le plan $S_i$ du vecteur $\overrightarrow{SN}_{\theta\, n,i}$ ou du vecteur rectifié $\overrightarrow{ES}_{\theta\, n,i}$. Ces deux coordonnées définissent la direction de l'outil dans le plan $S_i$.

Ce fichier est alors transféré dans la machine-outil 18.

La machine-outil 18 sera donc pilotée à partir des trois coordonnées $(R_i, H_i\, \theta_n)$ et des deux directions susmentionnées. Il est à noter que la machine-outil CMS utilisée ici est tout à fait adaptée pour être pilotée de façon automatique dès lors que les coordonnées ci-dessus lui sont délivrées sous un format équivalent et approprié bien connu de l'homme de l'art, notamment celui familier des post-processeurs.

Grâce à ces caractéristiques, l'outil attaquera la matière selon l'angle le plus favorable tout en évitant, ou, à tout le moins, en minimisant les risques de collisions porte-outil - matière mentionnés plus haut.

Il faut toutefois observer que dans certains cas (rares) de forte concavité, les coefficients $QD_i$ et $QS_i$ calculés après trois itérations ne seront pas positifs, et que dans de tels cas, une collision outil-matière est susceptible de se produire. La Demanderesse a constaté que ces cas sont rares, et, en pratique, s'agissant de vidéo sculpture d'un visage, inexistants. Cependant, pour la reproduction de volumes très tourmentés, il est possible de prévoir une alarme avec intervention manuelle permettant de corriger la direction de l'arbre porte-outil en cas de très forte concavité (cas d'une cavité par exemple). Il n'en reste pas moins que, grâce à l'invention, ces cas d'intervention manuelle restent fortement minimisés.

L'ensemble des étapes de calcul décrites depuis le paragraphe 3 ci-dessus, de même que, d'une façon générale, la gestion de l'ensemble du procédé et notamment le contrôle et la commande des fonctions et des processus décrits à l'appui des figures 8 et 9, ainsi que celles de la machine outil, sont assurés par le micro-ordinateur 21. Ce contrôle et cette gestion sont de nature classique, quoique adaptée au procédé qui vient d'être décrit. C'est pourquoi, ils ne seront pas décrits plus en détail ici.

Bien entendu, la présente invention n'est nullement limitée aux modes de réalisation décrits et représentés. Bien au contraire, en plus des variantes déjà indiquées, elle englobe toute autre variante à la portée de l'homme de l'art.

## Revendications

1. Procédé de détermination des coordonnées spatiales de chacun des points d'un ensemble de points source appartenant à une surface comportant une étape d'acquisition de données dans laquelle on éclaire, avec un faisceau plan de lumière, la surface, on enregistre avec au moins une caméra (13a, 13b) au moins une image de la trace $(P, p, \theta_n)$ laissée par le faisceau plan sur la surface (20), la trace laissée par le faisceau plan de lumière sur la surface étant dite "profil source", l'image de cette trace dans un plan image de la caméra étant dite "profil image", on déplace relativement le faisceau plan et la surface et on enregistre avec ladite caméra à nouveau au moins une image de la trace laissée par le faisceau plan sur la surface, on recommence les opérations de déplacement relatif, d'éclairage et d'enregistrement en sorte que l'on enregistre ainsi une pluralité de profils image constituant un échantillonnage de l'image de l'ensemble de la surface, le procédé comportant une étape de traitement au cours de laquelle, notamment, on considère les coordonnées lignes-colonne (Col, Lig) d'un ensemble de points image échantillonnant chaque profil image dans le plan image de ladite caméra, procédé caractérisé en ce que, mettant en oeuvre les considérations suivant lesquelles :
- dans le plan du faisceau lumineux, on choisit un axe directeur (Z) et on affecte des coordonnées dites "spatiales" (R,H) à chaque point dudit plan, R étant la distance entre le point considéré et l'axe directeur, H étant l'ordonnée de ce point sur cet axe :
- on prend en compte les formules suivantes de transformation des coordonnées (Col, Lig) de chacun des points du plan image de la caméra en coordonnées spatiales (R, H) du point source correspondant :

$$(1) \qquad R = \frac{\alpha_1\, \mathrm{Lig} + \alpha_2 \mathrm{Col} + \alpha_3}{\alpha_7 \mathrm{Lig} + \alpha_8 \mathrm{Col} + 1} \qquad H = \frac{\alpha_4 \mathrm{Lig} + \alpha_5 \mathrm{Col} + \alpha_6}{\alpha_7 \mathrm{Lig} + \alpha_8 \mathrm{Col} + 1}$$

les coefficients $\alpha_i$ étant dits "coefficients de transformation" et étant déterminés pour l'ensemble des points du plan image de ladite caméra, à partir de coefficients dits "d'interpolation" ($\beta_{ij}$), eux-mêmes calculés lors d'une phase préalable de calibration du plan image de la caméra au cours de laquelle :
. on enregistre l'image de séries juxtaposées de quatre points source de référence (51) situés dans le plan de lumière et dont les coordonnées spatiales (R, H) dans ce plan sont connues ; on relève les coordonnées images (Col, Lig) de l'image de chacun de ces points pour chaque série de quatre points source de référence (51) et on résout la formule de transformation (1), ce qui donne huit valeurs de coefficients de transformation $\alpha_i$ par série de quatre points de référence (51) ; on considère le barycentre (54) de chacune des séries de quatre points de référence (51) et on affecte à ce dernier les coefficients de transformation $\alpha_i$ ainsi déterminés ; on considère des zones d'interpolation ($T_k$) de forme triangulaire délimitées par des segments de droite joignant lesdits barycentres (54) de séries voisines, ces barycentres constituant les sommets desdites zones triangulaires ($T_k$) ; on utilise la formule d'interpolation suivante pour chaque coefficient de transformation $\alpha_i$:
(2)  $\alpha_i = \beta_{i1}\mathrm{Col} + \beta_{i2}\mathrm{Lig} + \beta_{i3}$
. on détermine ainsi vingt-quatre coefficients d'interpolation ($\beta_{ij}$) par zone triangulaire d'interpolation ($T_k$) en résolvant la formule d'interpolation (2) pour chacun des coefficients de transformation ($\alpha_i$) affecté à un sommet de zone triangulaire d'interpolation ($T_k$) ;
ce procédé consiste en outre, dans ladite phase de traitement, pour déterminer les coordonnées spatiales (R, H) d'un point source dont on connaît les coordonnées images (Col,Lig) de son image, à effectuer les opérations suivantes :
- rechercher, dans une opération de recherche, la zone d'interpolation ($T_k$) à laquelle le point appartient, ainsi que les coefficients d'interpolation ($\beta_{ij}$) associés à cette zone,
- calculer, dans une opération de calcul, les coordonnées spatiales (R, H) par application concomitante desdites formules de transformation (1) et d'interpolation (2).

2. Procédé selon la revendication 1, caractérisé en ce que lesdites opérations de recherche et de calcul comportent les étapes suivantes, pour chaque point image traité :
- une première étape d'initialisation (181), au cours de laquelle on attribue et on met en mémoire des valeurs arbitraires (O, O) aux variables (R, H) que l'on cherche à déterminer connaissant les coordonnées images (Col,Lig) du point traité ($P_{i,n}$).

- une seconde étape d'initialisation (182), au cours de laquelle on initialise deux variables intermédiaires ($R_o$, $H_o$) en mettant ces valeurs intermédiaires égales à la dernière valeur connue des variables (R, H), on met à zéro une variable k correspondant au numéro de la zone d'interpolation ($T_k$),

- une étape d'incrémentation (183) au cours de laquelle on incrémente la variable k,

- une étape (184) de lecture des coefficients d'interpolation ($\beta_{ij}$) associés à la zone d'interpolation $T_k$,

- un test d'appartenance (185) au cours duquel on recherche si le point ayant comme coordonnée lesdites variables intermédiaires ($R_o$, $H_o$) appartient à la zone d'interpolation portant le numéro k (triangle $T_k$) ; dans la négative on incrémente la valeur k et on recommence ce test;

- lorsque le test d'appartenance (185) est positif, au cours d'une étape de transformation (186), on vient lire dans un fichier image (Fla) les coordonnées images (Col,Lig) du point traité ($P_{i,n}$), et on applique concomitamment les formules de transformation (1) et d'interpolation (2) à partir des coefficients d'interpolation ($\beta_{ij}$) lus lors du test d'appartenance (185), pour calculer les coordonnées spatiales (R,H),

- un test de conformité (187) au cours duquel on vérifie l'égalité des coordonnées calculées à l'étape de transformation (186) avec les variables intermédiaires ($R_o$, $H_o$) ; dans la négative, on met les variables intermédiaires ($R_o$, $H_o$) égales à celles calculées lors de l'étape de transformation et on revient à la seconde étape d'initialisation (182).

3. Procédé de reconstitution des coordonnées spatiales de chacun des points d'un ensemble de points source appartenant à une surface comportant une étape d'acquisition de données dans laquelle on éclaire, avec un faisceau plan de lumière, la surface, on enregistre avec au moins une caméra (13a, 13b) au moins une image de la trace ($p,p,\theta_n$) laissée par le faisceau plan sur la surface (20), la trace laissée par le faisceau plan de lumière sur la surface étant dite "profil source", l'image de cette trace dans un plan image de la caméra étant dite "profil image", on déplace relativement le faisceau plan et la surface et on enregistre avec ladite caméra à nouveau au moins une image de la trace laissée par le faisceau plan sur la surface, on recommence les opérations de déplacement relatif, d'éclairage et d'enregistrement en sorte que l'on enregistre ainsi une pluralité de profils image constituant un échantillonnage de l'image de l'ensemble de la surface, le procédé étant caractérisé en ce qu'il comporte une étape de traitement au cours de laquelle, notamment, on considère les coordonnées lignes-colonne (Col, Lig) d'un ensemble de points image échantillonnant chaque profil image dans le plan image de ladite caméra et les coordonnées spatiales des points source correspondant à chacun des points du plan image, cette étape de traitement comportant une phase d'homogénéisation au cours de laquelle, pour chacun des points traités ($P_{i,n}$), on considère un nombre prédéterminé de points voisins, on calcule les coordonnées moyennes de ces points, et si le point traité est absent, ou si l'une au moins de ses coordonnées diffère de la coordonnée moyenne correspondante d'un écart supérieur à une valeur prédéterminée (E), on affecte au point traité lesdites coordonnées moyennes.

4. Procédé selon la revendication 3, caractérisé en ce qu'au cours de la phase d'homogénéisation, pour chaque point source traité, dont on a déterminé les coordonnées spatiales ($R_i$, $H_i$, $\theta_n$), on effectue les opérations suivantes :

- on détermine les points voisins du point ($R_i$, $H_i$, $\theta_n$) considéré ; on considère les $2p+1$ profils source allant de $\theta_{n-p}$ à $\theta_{n+p}$,

- sur chaque profil source $\theta_j$ ainsi considéré, on sélectionne les $2k+1$ points allant de ($R_{i-k}$, $H_{i-k}$, $\theta_j$) à ($R_{i+k}$, $H_{i+k}$, $\theta_j$),

- on calcule la moyenne $\overline{R}$ et la moyenne $\overline{H}$ des coordonnées (R, H) de chacun des points,

- si le point "traité" existe effectivement, on effectue une opération de filtrage au cours de laquelle pour chacun des points traités, on calcule une valeur absolue ($|R_i - \overline{R}|$) ; si cette valeur est supérieure à une valeur d'erreur donnée E, paramétrable, on élimine ledit point traité ($R_i$, $H_i$, $\theta_n$),

- si le point ($R_i$, $H_i$, $\theta_n$) "traité" n'existe pas ou s'il est éliminé, on effectue un opération dite de reconstitution au cours de laquelle on affecte au point ($R_i$, $H_i$, $\theta_n$), les valeurs moyennes calculées ($\overline{R}$, $\overline{H}$).

5. Procédé selon l'une quelconque des revendications 1 à 4, caractérisé en ce que ledit axe directeur (Z) est un axe de rotation, tandis que ledit déplacement relatif est une rotation autour de cet axe, une troisième coordonnée spatiale ($\theta$) étant déterminée par la coordonnée angulaire de la trace du faisceau de lumière laissé dans un plan perpendiculaire (X, Y) audit axe directeur, cette troisième coordonnée spatiale étant affectée à chaque profil enregistré par la caméra (13a, 13b).

6. Procédé selon l'une quelconque des revendications 1, 2 et 5, caractérisé en ce qu'il comporte en outre une phase d'homogénéisation au cours de laquelle, pour chacun des points traités ($P_{i,n}$), on considère un nombre prédéterminé de points voisins, on calcule les coordonnées moyennes de ces points, si le point traité est absent, ou si l'une au moins de ses coordonnées diffère de la coordonnée moyenne correspondante d'un écart supérieur à une valeur prédéterminée (E), on affecte au point traité lesdites coordonnées moyennes.

7. Procédé selon la revendication 6, caractérisé en ce que, au cours de la phase d'homogénéisation, pour chaque point source traité, dont on a déterminé les coordonnées spatiales ($R_i$, $H_i$, $\theta_n$), on effectue les opérations suivantes :

- on détermine les points voisins du point ($R_i$, $H_i$, $\theta_n$) considéré ; on considère les $2p+1$ profils source allant de $\theta_{n-p}$ à $\theta_{n+p}$,

- sur chaque profil source $\theta_j$ ainsi considéré, on sélectionne les $2k+1$ points allant de ($R_{i-k}$, $H_{i-k}$, $\theta_j$) à ($R_{i+k}$,

$H_{i+k}, \theta_j$),
- on calcule la moyenne $\overline{R}$ et la moyenne $\overline{H}$ des coordonnées (R, H) de chacun des points,
- si le point "traité" existe effectivement, on effectue une opération de filtrage au cours de laquelle pour chacun des points traités, on calcule une valeur absolue $|R_i - \overline{R}|$ ; si cette valeur est supérieure à une valeur d'erreur donnée E, paramétrable, on élimine ledit point traité $(R_i, H_i, \theta_n)$,
- si le point $(R_i, H_i, \theta_n)$ "traite" n'existé pas ou s'il est éliminé, on effectue une opération dite de reconstitution au cours de laquelle on affecte au point $(R_i, H_i, \theta_n)$, les valeurs moyennes calculées $(\overline{R}, \overline{H})$.

8. Procédé de réalisation d'une image tridimensionnelle d'une surface tridimensionnelle mettant en oeuvre le procédé selon l'une quelconque des revendications 1 à 7 appliqué à la détermination des coordonnées spatiales d'un ensemble de points appartenant à ladite surface, caractérisé en outre en ce qu'il met en oeuvre une machine-outil adaptée à commander un outil selon cinq degrés de liberté, à savoir trois degrés de liberté permettant le positionnement de cet outil dans l'espace, compte tenu desdites coordonnées spatiales et deux degrés de liberté déterminant un angle d'attaque de l'outil.

9. Procédé selon la revendication 8, caractérisé en ce que ledit angle d'attaque est tel que l'outil est généralement dirigé selon la normale à la surface image devant être réalisée et en ce que l'on procède à une détection des parties concaves de la surface pour corriger l'angle d'attaque de l'outil pour éviter autant que possible une interaction entre l'outil et la matière usinée.

10. Procédé selon la revendication 7, caractérisé en ce que pour la détection des parties concaves de la surface :
- on considère la trace laissée par ladite surface (20) dans un plan perpendiculaire à un axe directeur (Z) et passant par le point en cours de traitement $(P_{i,n})$, cette trace étant dite sécante $(S_i)$,
- on considère également le profil source $\theta_n$ auquel appartient le point traité $(R_i, H_i, \theta_n)$,
- on détecte les parties concaves du profil en effectuant les opérations suivantes :
. on considère un vecteur normal ($\overrightarrow{DN}_{\theta n, i-1}$, $\overrightarrow{DN}_{\theta n, i+1}$) à chacun des deux points voisins $(R_{i-1}, H_{i-1}, \theta_n)$ et $(R_{i+1}, H_{i+1}, \theta_n)$, du point traité $(R_i H_i, \theta_n)$
. on calcule le produit vectoriel desdits vecteurs normaux ($\overrightarrow{DN}_{\theta n, i-1}$, $\overrightarrow{DN}_{\theta n, i+1}$) au profil aux points voisins du point traité ; on détermine ainsi un coefficient de convexité $QD_i$ associé au point en traitement $(R_i, H_i, \theta_n)$,
. si le coefficient de convexité est négatif, le profil source est concave au point traité, et on calcule la somme ($\overrightarrow{ED}_{\theta n, i}$) desdits vecteurs normaux au profil, aux deux points voisins du point traité, ($\overrightarrow{DN}_{\theta n, i-1}$, $\overrightarrow{DN}_{\theta n, i+1}$),
. on mémorise ce vecteur somme ($\overrightarrow{ED}_{\theta n, i}$),
. on considère alors l'ensemble des points traités appartenant à un même profil $(\theta_n)$ ; on associe à chacun de ces points soit le vecteur normal au profil au point con sidéré, lorsque le coefficient de convexité (QD) considéré est positif, soit le vecteur somme, lorsque le coefficient de convexité (QD) est négatif,
. lorsque l'ensemble des points appartenant à un même profil est traité, on recommence un nombre prédéterminé de fois le traitement du profil en utilisant les vecteurs effectivement associés ($\overrightarrow{DN}_{\theta n, i}$, $\overrightarrow{ED}_{\theta n, i}$) au point traité $(R_i, H_i, \theta_n)$.
- on procède à un traitement analogue pour chacune des traces sécantes $(S_i)$ et on associe à chacun des points traités $(R_i, H_i, \theta_n)$ un vecteur correspondant soit à la normale à ladite trace sécante $S_i$ au point traité ($\overrightarrow{SN}_{\theta n, i}$), soit à un vecteur somme, ($\overrightarrow{ES}_{\theta n, i}$) des vecteurs effectivement associés aux points voisins $(R_i, H_i, \theta_{n-1})$ $(R_i, H_i, \theta_{n+1})$ au point traité $(R_i, H_i, \theta_n)$.
et pour chaque point, on dirige l'outil selon la direction des vecteurs effectivement associés audit point, dans le plan de son profil $(\theta_n)$ et dans celui de la trace sécante $(S_i)$ à laquelle il appartient.

11. Procédé de réalisation d'une image tridimensionnelle d'une surface tridimensionnelle dont on connaît les coordonnées spatiales d'un nombre prédéterminé de points $(R_i, H_i, \theta_n)$ échantillonnant cette surface, caractérisé en ce qu'il met en oeuvre une machine-outil (18) adaptée à commander un outil selon cinq degrés de liberté, à savoir trois degrés de liberté permettant le positionnement de cet outil dans l'espace, compte tenu desdites coordonnées spatiales et deux degrés de liberté déterminant un angle d'attaque de l'outil de telle sorte que l'outil soit généralement dirigé selon la normale à la surface devant être réalisée et en ce que l'on procède à une détection des parties concaves de la surface, pour corriger l'angle d'attaque de l'outil pour éviter autant que possible une interaction entre l'outil et la matière usinée, au cours de laquelle :
- on considère la trace laissée par ladite surface (20) dans un plan perpendiculaire à un axe directeur (Z) et passant par le point en cours de traitement $(P_{i,n})$, cette trace étant dite sécante $(S_i)$,
- on considère également un profil source $\theta_n$ auquel appartient le point traité $(R_i, H_i, \theta_n)$,
- on détecte les parties concaves du profil en effectuant les opérations suivantes :
. on considère un vecteur normal ($\overrightarrow{DN}_{\theta n, i-1}$, $\overrightarrow{DN}_{\theta n, i+1}$) à chacun des deux points voisins $(R_{i-1}, H_{i-1}, \theta_n)$ et $(R_{i+1}, H_{i+1}, \theta_n)$, du point traité $(R_i, H_i, \theta_n)$
. on calcule le produit vectoriel desdits vecteurs normaux ($\overrightarrow{DN}_{\theta n, i-1}$, $\overrightarrow{DN}_{\theta n, i+1}$) au profil aux points voisins du point traité ; on détermine ainsi un coefficient de convexité $QD_i$ associé au point en traitement $(R_i, H_i \theta_n)$,
. si le coefficient de convexité est négatif, le profil source est concave au point traité, en on calcule la somme ($\overrightarrow{ED}_{\theta n, 1}$) desdits vecteurs normaux au profil, aux deux points voisins du point traité, ($\overrightarrow{DN}_{\theta n, i-1}$, $\overrightarrow{DN}_{\theta n, i+1}$),

. on mémorise ce vecteur somme ( $\overrightarrow{ED}$ θn,i),

. on considère alors l'ensemble des points traités appartenant à un même profil (θn) ; on associe à chacun de ces points soit le vecteur normal au profil au point considéré, lorsque le coefficient de convexité (QD) considéré est positif, soit le vecteur somme, lorsque le coefficient de convexité (QD) est négatif,

. lorsque l'ensemble des point appartenant à un même profil est traité, on recommence un nombre prédéterminé de fois le traitement du profil en utilisant les vecteurs effectivement associés ( $\overrightarrow{DN}$ θn,i, $\overrightarrow{ED}$ θn,i) au point traité (Ri, Hi, θn).

- on procède à un traitement analogue pour chacune des traces sécantes (Si) et on associe à chacun des points traités (Ri, Hi, θn) un vecteur correspondant soit à la normale à ladite trace sécante Si au point traité $\overrightarrow{SN}$θ n,i, soit à un vecteur somme, ( $\overrightarrow{ES}$θ n,i) des vecteurs effectivement associés (ES, SN) aux points voisins (Ri, Hi, θn-1) (Ri, Hi, θn+1) au point traité (Ri, Hi, θn).

et, pour chaque point, on dirige l'outil selon la direction des vecteurs effectivement associés audit point, dans le plan de son profil (θn) et dans celui de la trace sécante (Si) à laquelle il appartient.

FIG. 1

FIG. 2

FIG. 2a

FIG. 2b

FIG. 3

FIG. 4

Points manquants

Points aberrants

Ligne 0

FIG. 5

Axe Z

Axe R

$P_r$

Plan $\theta = \theta_n$

FIG. 6

FIG. 7

FIG. 8

FIG. 9

points $R_{i-2}, H_{i-2}$ →

points $R_{i-1}, H_{i-1}$ →

points $R_i$ , $H_i$ →

points $R_{i+1}, H_{i+1}$ →

points $R_{i+2}, H_{i+2}$ →

$P_2$

$P_5$

$P_4$

$P_{i,n}$

$P_3$

$\theta_{n-2}$  $\theta_{n-1}$  $\theta_n$  $\theta_{n+1}$  $\theta_{n+2}$

$P_{i,n} = (R_i, H_i, \theta_n)$

<u>FIG.10</u>

Axe Z

$\overrightarrow{DN}_{\theta_n,i}$

$HN_i$

$P_{i,n} = (R_i, H_i, \theta_n)$

$RN_i$

Axe R

$\theta_n$

<u>FIG.11</u>

**FIG. 12**

**FIG. 13**

FIG. 14

FIG. 15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | WO-A-8 701 194 (D.A. ADDLEMAN) <br> * Figures 1-7; titre, page 4, paragraphe 2 - page 6, paragraphe 5 * <br> --- | 1,5 | G 01 B 11/00 <br> G 01 B 11/24 <br> G 05 B 19/42 <br> G 05 B 19/403 <br> B 23 Q 35/128 |
| Y,X | US-A-4 294 544 (B.R. ALTSCHULER) <br> * Figures 1,2,3,8a-d; titre; colonne 6, ligne 1 - colonne 8, ligne 32; colonne 13, ligne 15 - colonne 18, ligne 38 * <br> --- | 1 | |
| X | WO-A-8 002 591 (P. DEISLER) <br> * Figures 1-9; titre; page 5, ligne 11 - page 18, ligne 30 * <br> --- | 1 | |
| A | WO-A-8 706 353 (VALTION TEKNILLINEN TUTKIMUSKESKUS) <br> * Titre; figures 1-5; page 4, ligne 25 - page 13, ligne 39 * <br> --- | 1,3 | |
| A | DE-A-3 101 226 (J.M. RÖHRICH) <br> * Figures; en entier * <br> --- | 8-11 | |
| A | PROCEEDINGS IECON '85, 1985 INTERNATIONAL CONFERENCE ON INDUSTRIAL ELECTRONICS, CONTROL AND INSTRUMENTATION, San Francisco, 18-22 novembre 1985, vol. 1, pages 299-302, IEEE; J. MOCHIZUKI: "Unpositioned workpieces handling robot with visual and force sensors" <br> * Pages 299-302 * <br> --- | 3 | **DOMAINES TECHNIQUES RECHERCHES (Int. Cl.4)** <br><br> G 01 B <br> G 05 B <br> G 06 F <br> B 23 Q |
| A | EP-A-0 157 299 (HITACHI LTD) <br> * Figures 1-12; page 4, ligne 17 - page 16, ligne 21 * <br> ---        -/- | 1 | |

Le présent rapport a été établi pour toutes les revendications

| Lieu de la recherche | Date d'achèvement de la recherche | Examinateur |
|---|---|---|
| LA HAYE | 11-07-1989 | VISSER F.P.C. |

EPO FORM 1503 03.82 (P0402)

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 498 778 (S.J. WHITE)<br>* Figures 1-13; colonne 4, ligne 32 - colonne 13, ligne 42 * | 1 | |

DOMAINES TECHNIQUES RECHERCHES (Int. Cl.4)

Le présent rapport a été établi p-- -outes les revendications

| Lieu de la recherche | Date d'achèvement de la recherche | Examinateur |
|---|---|---|
| LA HAYE | 11-07-1989 | VISSER F.P.C. |

EPO FORM 1503 03.82 (P0402)